# EUROPEAN PATENT APPLICATION

(11) **EP 4 835 442 A1**
(43) Date of publication of application: **04.11.2026**
(21) Application number: 26175380.0
(22) Date of filing: 29.04.2026
(51) Int. Cl.: G01N 15/14, G01N 21/64, G01N 15/10

(54) **METHODS FOR ASSESSING A SPECTRAL UNMIXING MATRIX FOR USE IN ANALYSIS OF FLOW CYTOMETRY DATA AND SYSTEMS FOR SAME**

(30) Priority: 02.05.2025 US 202519197747
(71) Applicant: BECTON, DICKINSON AND COMPANY, Franklin Lakes NJ 07417-1880 (US)
(72) Inventor: Alcorn, Bryan Carl, Livermore, 94550 (US); Ludington Mage, Peter, San Jose, 95124 (US); Ali, Sana, Fremont, 94538 (US); Choy, Lauren Marie, 94066, San Bruno (US)
(74) Representative: Bals & Vogel Patentanwälte PartGmbB

(57) **Abstract**

Aspects of the present disclosure include methods for assessing a spectral unmixing matrix (e.g., for use in determining the suitability of a fluorochrome panel in generating flow cytometer data). Methods according to certain embodiments include receiving a calculated spectral unmixing matrix in a computer cache, assessing a matrix quality parameter of the calculated spectral unmixing matrix, adjusting a cached input into the spectral unmixing matrix based on the assessed matrix quality parameter, recalculating the spectral unmixing matrix with the adjusted input and displaying on a graphical user interface on a display an updated matrix quality parameter of the spectral unmixing matrix in response to the adjusted input. Systems and non-transitory computer-readable storage media configured to carry out the subject methods are also provided.

## Description

### INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left un-charged.

Flow cytometry is based on a semi-quantitative measurement of fluorescence intensities on single cell, and is often multiplexed, where multiple spectrally distinct fluorochromes are measured simultaneously and subsequently the signals are deconvolved using a process of spectral compensation or unmixing. Due to the physics of fluorescence detection, the variance (and thus signal-to-noise) with which one fluorochrome is measured in a flow cytometry experiment can be affected by the presence of other fluorochromes in the experiment. Spillover spreading error is measured by calculating the standard deviation in the unmixed or compensated signal of a first fluorochrome, as measured on a singly-stained cell population that expresses a second fluorochrome. This standard deviation is then compared to the standard deviation for an unstained population, and the difference in standard deviations is normalized to the intensity of the second fluorochrome to yield the spillover spreading error. This calculation captures the spread caused by the second fluorochrome into the first fluorochrome.

### SUMMARY

The inventors realized that the quality of the spectral unmixing matrix can largely affect the reliability and accuracy of flow cytometry data generated with a fluorochrome panel. In particular, in determining the suitability of a fluorochrome panel for generating flow cytometer data the spectral unmixing matrix will affect the resolution and quality of the data (e.g., through reduced spectral spread or spectral variance) as well as determines the precision of sorting gates and sort decisions. Embodiments of the present disclosure address the above, among other, problems. The inventors have determined that an intuitive visualization and real time (or near real-time) update to the spectral unmixing matrix can provide for maintaining high precision data generation in a flow cytometry experiment and quickly identify and fix problematic fluorochromes or autofluorescence in a fluorochrome panel. The inventors have discovered the use of assessing matrix quality parameters in making adjustments to a spectral unmixing matrix with parallelism and a caching mechanism in order to optimize the flow cytometry data generated with a fluorochrome panel chosen for the analysis of a sample.

Aspects of the present disclosure include methods for assessing a spectral unmixing matrix (e.g., for use in determining the suitability of a fluorochrome panel in generating flow cytometer data). Methods according to certain embodiments include receiving a calculated spectral unmixing matrix in a computer cache, assessing a matrix quality parameter of the calculated spectral unmixing matrix, adjusting a cached input into the spectral unmixing matrix based on the assessed matrix quality parameter, recalculating the spectral unmixing matrix with the adjusted input and displaying on a graphical user interface on a display an updated matrix quality parameter of the spectral unmixing matrix in response to the adjusted input. Systems and non-transitory computer-readable storage media configured to carry out the subject methods are also provided.

In some embodiments, methods include assessing a matrix quality parameter of the calculated spectral unmixing matrix selected from the group consisting of complexity index, similarity index, a hotspot matrix, condition index, matrix of variance decomposition proportions (VDPs), spread correlation matrix, collinearity, variance inflation factor and covariance matrix. In some instances, a similarity index of the calculated spectral unmixing matrix is assessed. In some instances, a complexity index of the calculated spectral unmixing matrix is assessed. In some instances, a hotspot matrix of the calculated spectral unmixing matrix is assessed. In some instances, assessing the matrix quality parameters includes visualizing data plots of the calculated spectral unmixing matrix.

In embodiments, a cached input of the spectral unmixing matrix in the computer cache is adjusted based on the assessed matrix quality parameters. In some instances, methods include determining whether the cache includes results for one or more control data used in calculating the spectral unmixing matrix. Where no results are cached for a control, methods include computing statistics and results for the control data. In some instances, the input includes single stain positive control data. In certain instances, the single stain positive control data is generated from single stain control beads. In certain instances, the single stain positive control data is generated from single stain control cells. In some instances, the input includes autofluorescence control data. In some instances, the input includes unstained control data. In some instances, the input includes negative control data. In some instances, the input is raw control data. In some instances, the input includes control data computations. In some instances, the input includes control data statistics (e.g., generated from computations of the control data). In some instances, the input includes calculated gate statistics. In certain embodiments, the inputs are adjusted with the graphical user interface.

In some embodiments, methods include storing input control data in the computer cache and generating one or more of input control data computations and input control data statistics from the stored input control data. In some instances, the method further includes clearing the stored input control data from the computer cache when an adjustment is made to the input control data. In some instances, methods include determining whether an input control data is stored in the computer cache. In some instances, control data computations and control data statistics are generated when the input control data is determined to be not present in the computer cache and the generated control data computations and control data statistics are stored in the computer cache. In some instances, the method includes determining that the input control data comprises an uncached negative control, generating data computations and data statistics for the uncached negative control; and caching the data computations and data statistics for the uncached negative control. In some instances, the method includes determining that the input control data comprises a cached negative control, retrieving data computations and data statistics for the cached negative control; and recalculating data computations and data statistics for the cached negative control. In some instances, methods include determining that the input control data comprises an uncached negative control, retrieving input control data comprising a cached negative control; and generating data computations and data statistics for the uncached negative control and the cached negative control. In certain instances, the spectral unmixing matrix is recalculated with the updated input control data that is stored in the cache.

In some instances, small adjustments are made to the inputs of the calculated spectral unmixing matrix. In some instances, the spectral unmixing matrix is recalculated when the adjusted input includes a change in the input that is equal to or below a predetermined threshold. In some instances, the spectral unmixing matrix is recalculated when the adjusted input includes a change in the input that is above a predetermined threshold. In some instances, a computed input is retrieved from the computer cache before adjusting the input. In some instances, a cached input is cleared before adjusting the input. In some instances, methods include clearing a cached input and applying a new input into the spectral unmixing matrix. In some instances, adjusting a cached input includes excluding certain control data when recalculating the spectral unmixing matrix. In some instances, adjusting a cached input includes applying new control data when recalculating the spectral unmixing matrix. In some instances, adjusting a cached input includes changing an autofluorescence gate of autofluorescence control data when recalculating the spectral unmixing matrix.

In some embodiments, methods include displaying a plurality of different matrix quality parameters on the graphical user interface. In some instances, the updated matrix quality parameter of the spectral unmixing matrix is displayed on the graphical user interface in near real-time in response to the adjusted input. In other instances, the updated matrix quality parameter of the spectral unmixing matrix is displayed on the graphical user interface in real time in response to the adjusted input.

In certain embodiments, methods include generating fluorescence (and autofluorescence) data for computing the spectral unmixing matrix. In some instances, methods include irradiating a sample having particles with a light source and measuring light from the irradiated sample. In some instances, the particles are control beads. In some instances, the particles are control cells. In some instances, the particles are unstained particles. In some instances, the particles are single stain particles.

In some instances, the light source includes one or more lasers. In some instances, light is detected with a light detection system having a plurality of photodetectors. In some embodiments, one or more of the photodetectors is a photomultiplier tube. In some embodiments one or more of the photodetectors is a photodiode (e.g., an avalanche photodiode, APD). In certain embodiments, the light detection system includes a photodetector array, such as a photodetector array having a plurality of photodiodes or charged coupled devices (CCDs).

Aspects of the present disclosure also include systems for practicing the subject methods. Systems according to certain embodiments include a processor having memory operably coupled to the processor where the memory includes instructions stored thereon, which when executed by the processor, cause the processor to: receive a calculated spectral unmixing matrix in a computer cache of the system processor, assess a matrix quality parameter of the calculated spectral unmixing matrix, adjust a cached input into the spectral unmixing matrix based on the assessed matrix quality parameter, recalculate the spectral unmixing matrix with the adjusted input and display on a graphical user interface on a display an updated matrix quality parameter of the spectral unmixing matrix in response to the adjusted input.

In some embodiments, the memory includes instructions for assessing a matrix quality parameter of the calculated spectral unmixing matrix selected from the group consisting of complexity index, similarity index, a hotspot matrix, condition index, matrix of variance decomposition proportions (VDPs), spread correlation matrix, collinearity, variance inflation factor and covariance matrix. In some instances, the memory includes instructions for assessing a similarity index of the calculated spectral unmixing matrix. In some instances, the memory includes instructions for assessing a complexity index of the calculated spectral unmixing matrix. In some instances, the memory includes instructions for assessing a hotspot matrix of the calculated spectral unmixing matrix. In some instances, the memory includes instructions for assessing the matrix quality parameters by visualizing data plots of the calculated spectral unmixing matrix.

In some embodiments, the memory includes instructions for adjusting a cached input of the spectral unmixing matrix in the computer cache based on the assessed matrix quality parameters. In some instances, the memory includes instructions for determining whether the cache includes results for one or more control data used in calculating the spectral unmixing matrix. Where no results are cached for a control, the memory includes instructions for computing statistics and results for the control data. In some instances, the input includes single stain positive control data. In certain instances, the single stain positive control data is generated from single stain control beads. In certain instances, the single stain positive control data is generated from single stain control cells. In some instances, the input includes autofluorescence control data. In some instances, the input includes unstained control data. In some instances, the input includes negative control data. In some instances, the input is raw control data. In some instances, the input includes control data computations. In some instances, the input includes control data statistics (e.g., generated from computations of the control data). In some instances, the input includes calculated gate statistics. In certain embodiments, the inputs are adjusted with the graphical user interface.

In some embodiments, the memory includes instructions for storing input control data in the computer cache and generating one or more of input control data computations and input control data statistics from the stored input control data. In some instances, the memory includes instructions for clearing the stored input control data from the computer cache when an adjustment is made to the input control data. In some instances, the memory includes instructions for determining whether an input control data is stored in the computer cache. In some instances, control data computations and control data statistics are generated when the input control data is determined to be not present in the computer cache and the generated control data computations and control data statistics are stored in the computer cache. In some instances, the memory includes instructions for determining that the input control data comprises an uncached negative control, generating data computations and data statistics for the uncached negative control; and caching the data computations and data statistics for the uncached negative control. In some instances, the memory includes instructions for determining that the input control data comprises a cached negative control, retrieving data computations and data statistics for the cached negative control; and recalculating data computations and data statistics for the cached negative control. In some instances, the memory includes instructions for determining that the input control data comprises an uncached negative control, retrieving input control data comprising a cached negative control; and generating data computations and data statistics for the uncached negative control and the cached negative control. In certain instances, the memory includes instructions for recalculating the spectral unmixing matrix with the updated input control data that is stored in the cache.

In some instances, the memory includes instructions for making small adjustments to the inputs of the calculated spectral unmixing matrix. In some instances, the memory includes instructions for recalculating the spectral unmixing matrix when the adjusted input includes a change in the input that is equal to or below a predetermined threshold. In some instances, the memory includes instructions for recalculating the spectral unmixing matrix when the adjusted input includes a change in the input that is above a predetermined threshold. In some instances, the memory includes instructions for retrieving a computed input from the computer cache before adjusting the input. In some instances, the memory includes instructions for clearing a cached input before adjusting the input. In some instances, the memory includes instructions for clearing a cached input and applying a new input into the spectral unmixing matrix. In some instances, the memory includes instructions for adjusting a cached input by excluding certain control data when recalculating the spectral unmixing matrix. In some instances, the memory includes instructions for adjusting a cached input by applying new control data when recalculating the spectral unmixing matrix. In some instances, the memory includes instructions for adjusting a cached input by changing an autofluorescence gate of autofluorescence control data when recalculating the spectral unmixing matrix.

In some embodiments, systems include a display for visualizing matrix quality parameters, data plots from the spectral unmixing matrix as well as inputs into the spectral unmixing matrix on a graphical user interface. In some instances, the memory includes instructions for displaying a plurality of different matrix quality parameters on the graphical user interface. In some instances, the memory includes instructions for displaying the updated matrix quality parameter of the spectral unmixing matrix on the graphical user interface in near real-time in response to the adjusted input. In other instances, the memory includes instructions for displaying the updated matrix quality parameter of the spectral unmixing matrix on the graphical user interface in real time in response to the adjusted input.

In some embodiments, systems include a light source and a light detection system having one or more photodetectors. In some instances, the light source is a light emitting diode. In some embodiments, systems include a light source having one or more lasers, such as a plurality of lasers. In some instances, the light detection system includes a plurality of photodetectors. In some instances, the photodetectors include one or more photomultiplier tubes. In some instances, the light detection system includes a photodetector array. In certain instances, one or more of the photodetectors in the array is a photodiode (e.g., an avalanche photodiode). In certain instances, one or more of the photodetectors in the array are charged coupled devices. In some instances, the system is configured to detect light by the light detection system in a plurality of photodetector channels. In some embodiments, the generated spectral data signals are a sum of the data signals collected across a plurality of photodetector channels.

Aspects of the present disclosure also include non-transitory computer readable storage medium, such as to practice one or more computer implemented methods described herein. In some embodiments, the non-transitory computer readable storage medium includes algorithm for receiving a calculated spectral unmixing matrix in a computer cache, algorithm for assessing a matrix quality parameter of the calculated spectral unmixing matrix, algorithm for adjusting a cached input into the spectral unmixing matrix based on the assessed matrix quality parameter, algorithm for recalculating the spectral unmixing matrix with the adjusted input and algorithm for displaying on a graphical user interface on a display an updated matrix quality parameter of the spectral unmixing matrix in response to the adjusted input.

In some embodiments, the non-transitory computer readable storage medium includes algorithm for assessing a matrix quality parameter of the calculated spectral unmixing matrix selected from the group consisting of complexity index, similarity index, a hotspot matrix, condition index, matrix of variance decomposition proportions (VDPs), spread correlation matrix, collinearity, variance inflation factor and covariance matrix. In some instances, the memory includes instructions for assessing a similarity index of the calculated spectral unmixing matrix. In some instances, the non-transitory computer readable storage medium includes algorithm for assessing a complexity index of the calculated spectral unmixing matrix. In some instances, the non-transitory computer readable storage medium includes algorithm for assessing a hotspot matrix of the calculated spectral unmixing matrix. In some instances, the non-transitory computer readable storage medium includes algorithm for assessing the matrix quality parameters by visualizing data plots of the calculated spectral unmixing matrix.

In some embodiments, the non-transitory computer readable storage medium includes algorithm for adjusting a cached input of the spectral unmixing matrix in the computer cache based on the assessed matrix quality parameters. In some instances, the non-transitory computer readable storage medium includes algorithm for determining whether the cache includes results for one or more control data used in calculating the spectral unmixing matrix. Where no results are cached for a control, the non-transitory computer readable storage medium includes algorithm for computing statistics and results for the control data. In some instances, the input includes single stain positive control data. In certain instances, the single stain positive control data is generated from single stain control beads. In certain instances, the single stain positive control data is generated from single stain control cells. In some instances, the input includes autofluorescence control data. In some instances, the input includes unstained control data. In some instances, the input includes negative control data. In some instances, the input is raw control data. In some instances, the input includes control data computations. In some instances, the input includes control data statistics (e.g., generated from computations of the control data). In some instances, the input includes calculated gate statistics. In certain embodiments, the non-transitory computer readable storage medium includes algorithm for adjusting inputs with the graphical user interface.

In some embodiments, the non-transitory computer readable storage medium includes algorithm for storing input control data in the computer cache and generating one or more of input control data computations and input control data statistics from the stored input control data. In some instances, the non-transitory computer readable storage medium includes algorithm for clearing the stored input control data from the computer cache when an adjustment is made to the input control data. In some instances, the non-transitory computer readable storage medium includes algorithm for determining whether an input control data is stored in the computer cache. In some instances, control data computations and control data statistics are generated when the input control data is determined to be not present in the computer cache and the generated control data computations and control data statistics are stored in the computer cache. In some instances, the non-transitory computer readable storage medium includes algorithm for determining that the input control data comprises an uncached negative control, generating data computations and data statistics for the uncached negative control; and caching the data computations and data statistics for the uncached negative control. In some instances, the non-transitory computer readable storage medium includes algorithm for determining that the input control data comprises a cached negative control, retrieving data computations and data statistics for the cached negative control; and recalculating data computations and data statistics for the cached negative control. In some instances, the non-transitory computer readable storage medium includes algorithm for determining that the input control data comprises an uncached negative control, retrieving input control data comprising a cached negative control; and generating data computations and data statistics for the uncached negative control and the cached negative control. In certain instances, the non-transitory computer readable storage medium includes algorithm for recalculating the spectral unmixing matrix with the updated input control data that is stored in the cache.

In some instances, the non-transitory computer readable storage medium includes algorithm for making small adjustments to the inputs of the calculated spectral unmixing matrix. In some instances, the non-transitory computer readable storage medium includes algorithm for recalculating the spectral unmixing matrix when the adjusted input includes a change in the input that is equal to or below a predetermined threshold. In some instances, the non-transitory computer readable storage medium includes algorithm for recalculating the spectral unmixing matrix when the adjusted input includes a change in the input that is above a predetermined threshold. In some instances, the non-transitory computer readable storage medium includes algorithm for retrieving a computed input from the computer cache before adjusting the input. In some instances, the non-transitory computer readable storage medium includes algorithm for clearing a cached input before adjusting the input. In some instances, the non-transitory computer readable storage medium includes algorithm for clearing a cached input and applying a new input into the spectral unmixing matrix. In some instances, the non-transitory computer readable storage medium includes algorithm for adjusting a cached input by excluding certain control data when recalculating the spectral unmixing matrix. In some instances, the non-transitory computer readable storage medium includes algorithm for adjusting a cached input by applying new control data when recalculating the spectral unmixing matrix. In some instances, the non-transitory computer readable storage medium includes algorithm for adjusting a cached input by changing an autofluorescence gate of autofluorescence control data when recalculating the spectral unmixing matrix.

In some instances, the non-transitory computer readable storage medium includes algorithm for displaying a plurality of different matrix quality parameters on the graphical user interface. In some instances, the non-transitory computer readable storage medium includes algorithm for displaying the updated matrix quality parameter of the spectral unmixing matrix on the graphical user interface in near real-time in response to the adjusted input. In other instances, the non-transitory computer readable storage medium includes algorithm for displaying the updated matrix quality parameter of the spectral unmixing matrix on the graphical user interface in real time in response to the adjusted input.

### BRIEF DESCRIPTION OF THE FIGURES

The disclosure may be best understood from the following detailed description when read in conjunction with the accompanying drawings. Included in the drawings are the following figures:
**FIG. 1A** depicts a flow chart for assessing and adjusting a spectral unmixing matrix according to certain embodiments. **FIG. 1B** depicts a flow diagram of adjusting a spectral unmixing matrix in a computer cache according to certain embodiments. **FIG. 1C** depicts a workflow for setting up an unmixing experiment to calculate compensation results for a fluorochrome panel according to certain embodiments. **FIG. 1D** depicts an example of a graphical user interface for assessing matrix quality parameters and adjustments for a spectral unmixing matrix according to certain embodiments.
**FIG. 2** presents a flow cytometric system according to certain embodiments.
**FIG. 3A** depicts an image-enabled particle sorter according to certain embodiments. **FIG. 3B** depicts image-enabled particle sorting data processing according to certain embodiments.
**FIG. 4A** depicts a functional block diagram of a particle analysis system according to certain embodiments. **FIG. 4B** depicts a flow cytometer according to certain embodiments.
**FIG. 5** depicts a depicts a functional block diagram for one example of a control system according to certain embodiments.
**FIG. 6A** depicts schematic drawings of a particle sorter system according to certain embodiments. **FIG. 6B** depicts a schematic drawing of a particle sorter system according to certain embodiments.
**FIG. 7** depicts aspects of a computer-controlled system according to certain embodiments.

### DETAILED DESCRIPTION

Aspects of the present disclosure include methods for assessing a spectral unmixing matrix (e.g., for use in determining the suitability of a fluorochrome panel in generating flow cytometer data). Methods according to certain embodiments include receiving a calculated spectral unmixing matrix in a computer cache, assessing a matrix quality parameter of the calculated spectral unmixing matrix, adjusting a cached input into the spectral unmixing matrix based on the assessed matrix quality parameter, recalculating the spectral unmixing matrix with the adjusted input and displaying on a graphical user interface on a display an updated matrix quality parameter of the spectral unmixing matrix in response to the adjusted input. Systems and non-transitory computer-readable storage media configured to carry out the subject methods are also provided.

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

### METHODS FOR ASSESSING A SPECTRAL UNMIXING MATRIX

Aspects of the present disclosure include a computer implemented method for assessing a spectral unmixing matrix such as for use in determining the suitability of a fluorochrome panel in generating flow cytometer data. As discussed above, the quality of a spectral unmixing matrix can have a large effect on the reliability and accuracy of flow cytometer data generated with a plurality of different fluorochromes. An optimized spectral unmixing matrix provides for precisely separating the contributions of fluorochromes to the measured fluorescence signals. The spectral unmixing matrix is used in determining the relative abundance of fluorochromes in complex samples having a plurality of overlapping fluorescence spectra. In embodiments, assessing and adjusting a spectral unmixing matrix as described herein provides for increases in the sensitivity and accuracy of flow cytometer data. In some instances, the optimized spectral unmixing matrix provides for more accurate spectral unmixing to separate contributions between spectra of different components of the detected light, such as where spectral unmixing effectiveness is increased by 5% or more, such as by 10% or more, such as by 25% or more, such as by 50% or more, such as by 75% or more, such as by 90% or more and including by 95% or more. In some instances, an optimized spectral unmixing matrix results in the reduction or elimination of artifacts in spectrally unmixed data. In some instances, the methods described herein provide for reducing or eliminating background signal for fluorochromes with similar spectra as well as due to autofluorescence by particles in the sample.

In addition, methods for assessing and adjusting a spectral unmixing matrix as described in the present disclosure provide for a caching mechanism that maintains high performance of the flow cytometer and parallelism in the adjustments to the spectral unmixing matrix and the quality of characterizing and correcting the spectral spillover spread between fluorochromes. The changes to inputs of the spectral unmixing matrix provide for substantially real-time changes to the spectral unmixing matrix such that matrix quality parameters can be visualized substantially immediately when control data or computations are made with a graphical user interface. In certain instances, updates to the matrix quality parameters can be visualized concurrently while changes are being made to control data or control data computations and statistics. This feedback facilitates intuitive changes to control data for each spectral unmixing matrix and precise optimization of a fluorochrome panel for use in a flow cytometry experiment. In certain instances, assessing and adjusting a spectral unmixing matrix according to embodiments of present disclosure reduces the amount of time to determine an optimized fluorochrome panel for use in a flow cytometry experiment, such as by 25% or more, such as by 30% or more, such as by 35% or more, such as by 40% or more, such as by 45% or more, such as by 50% or more, such as by 75% or more, such as by 90% or more and including by 95% or more.

In embodiments, a spectral unmixing matrix for a panel of fluorochromes is calculated. In some embodiments, the spectral unmixing matrix is calculated in a computer cache. In some instances, the calculated spectral unmixing matrix is stored in the computer cache. The term "computer cache" is used herein in its conventional sense to refer to a hardware or software component (e.g., in a computer having a processor) that temporarily stores data, data computations or data statistics. In some instances, the computer cache acts as a high-speed buffer allowing faster access to the spectral unmixing matrix calculations and matrix quality parameters. In embodiments, the cache may be in a CPU of the computer (computer cache), in a hard drive of the computer (hard drive cache), or present on a local or remote server (server cache) in functional communication with the subject systems.

The term "spectral matrix" is used herein in its conventional sense to refer to a matrix containing information about the spectral properties of a set of fluorochromes. In embodiments, spectral matrices of interest include a set of spectral signatures associated with each fluorochrome identifier in a set of fluorochrome identifiers. A "spectral signature" refers to the characteristics of an individual fluorochrome's fluorescent spectrum represented as one or more numerical values. Two entities may be described as "associated with" one another if they are linked and/or related to one another in data space. Put another way, the spectral matrix associated with the instrument identifier (also referred to herein as the "input" or "original" spectral matrix) may represent the "palette" of possible fluorochromes or dyes that the subject fluorochrome panel may be selected from. In certain cases, a spectral matrix contains information pertinent to the spectral properties of each fluorophore on an instrument (e.g., flow cytometer) of interest. Such information may vary on different machines. For example, the differences with respect to the number and arrangement of lasers and detection channels among separate instruments may result in different spectral signatures associated with each instrument. Accordingly, embodiments of the subject methods employ a spectral matrix including spectral signatures that are specific to the particular instrument (or class/type of instrument) in which the fluorochromes in the assessed fluorochrome panel would hypothetically be employed. Due to differences between instruments, it is possible that the same fluorochrome panel may be more or less associated with variance in flow cytometer data if the fluorochromes were applied on two different types of machine (e.g., flow cytometer). In some instances, obtaining a spectral matrix associated with an instrument identifier allows a fluorochrome panel to be assessed in an instrument-specific context, thereby permitting one of skill in the art practicing the subject methods to more reliably gain insight into the quality of flow cytometer data if fluorochromes in a given panel were used in a particular instrument.

A "fluorochrome panel" refers to a set of different fluorescent molecular substances (i.e., dyes) that may be used to identify particles in a sample or particular moieties or components associated therewith. The "fluorochrome panel" discussed herein may also refer to a set of identifiers (e.g., digital identifiers) that uniquely refer to and are associated with particular fluorescent molecular substances. Such identifiers may be referred to in certain instances as fluorochrome identifiers. Distinct fluorochromes within the fluorochrome panel may differ with respect to properties such as absorption spectra, extinction coefficients, emission spectra, and quantum efficiency (i.e., the number of photons emitted for every photon absorbed), or combinations thereof. As such, different or distinct fluorochromes may differ from each other in terms of chemical composition and/or in terms of one or more properties of the dyes. For example, a given pair of fluorochromes may be considered distinct if they differ from each other in terms of excitation and/or emission maximum, where the magnitude of such difference is, in some instances, 5 nm or more, such 10 nm or more, including 15 nm or more, wherein in some instances the magnitude of the difference ranges from 5 to 400 nm, such as 10 to 200 nm, including 15 to 100 nm, such as 25 to 50 nm.

In some embodiments, the spectral signatures are received from experimental data (i.e., the results of an experiment carried out on a particular instrument). In other cases, the spectral signatures are received from simulated data. The input spectral matrix may be associated with any suitable number of fluorochrome identifiers. In some embodiments, the number of fluorochrome identifiers in the input spectral matrix ranges from 2 to 150, such as 2 to 140, such as 2 to 130, such as 2 to 120, such as 2 to 110, such as 2 to 100, such as 2 to 90, such as 2 to 80, such as 2 to 70, such as 2 to 60, and including 2 to 50. The collection of fluorochrome identifiers employed in a given embodiment of the invention may be referred to as a fluorochrome palette, which collectively refers to the fluorochrome identifiers from which a given fluorochrome panel may be chosen.

In embodiments, the spectral signatures include one or more spillover values. By "spillover value", it is meant a relative amount of signal that a given fluorochrome emits into each detector band. In certain cases, spillover values are normalized to the detector with maximum signal (i.e., the "peak" detector) for that fluorochrome. In some cases, particle-modulated light indicative of a particular fluorochrome is received by one or more detectors in a particle analyzer (e.g., flow cytometer) that are not the peak detector(s) for that fluorochrome. As such, light may "spill-over" and be detected by off-peak detectors. In other words, the particular fluorescent labels used for an experiment and their associated fluorescent emission bands may be selected to generally coincide with certain detectors. However, as more detectors are provided, and more labels are utilized, perfect correspondence between certain detectors and fluorescent emission spectra may not be possible. It is generally true that although the peak of the emission spectra of a particular fluorescent molecule may lie within the window of one particular detector, some of the emission spectra of that label will also overlap the windows of one or more other detectors. This may be referred to as spillover.

In some embodiments, the spectral matrix described herein may include one or more autofluorescence spectral signatures. Autofluorescence is the intrinsic fluorescent signal generated by particles such as cells when measured in a flow cytometer. It arises from fluorescently active endogenous molecules such as metabolites in cells. Different cells of the same type (e.g., lymphocytes) may have the same autofluorescence spectrum but at different intensities, e.g., larger cells typically tend to have a larger autofluorescence signal. In certain instances, particles of different types are associated with different autofluorescence spectra. For example, cells of different types (e.g., lymphocytes vs. monocytes) may not only have varying levels of autofluorescence, but may also have different autofluorescence spectra (e.g., the spectral signature of lymphocyte autofluorescence may be distinct from the spectral signature of monocyte autofluorescence). In some cases, such as in spectral cytometry, the spectral signature of autofluorescence is measured by looking at unstained cells, and it is included in the spectral unmixing process as an additional "fluorochrome" parameter or parameters, if multiple autofluorescence spectra are included.

As mentioned above, the obtained spectral matrix is associated with the fluorochrome panel. Put another way, the obtained spectral matrix is a submatrix of the input spectral matrix (e.g., the spectral matrix associated with an instrument identifier) that includes spectral signatures for only the fluorochromes in the fluorochrome panel. A "submatrix" is discussed herein in its conventional sense to describe a matrix that is obtained by deleting some combination of rows and/or columns of another matrix.

In some embodiments, the calculated spectral unmixing matrix is generated from a plurality of different input controls. In some instances, the input includes single stain positive control data. In certain instances, the single stain positive control data is generated from single stain control beads. In certain instances, the single stain positive control data is generated from single stain control cells. In some instances, the input includes autofluorescence control data. In some instances, the input includes unstained control data. In some instances, the input includes negative control data. In some instances, the input is raw control data. In some instances, the input includes control data computations. In some instances, the input includes control data statistics (e.g., generated from computations of the control data). In some instances, the input includes calculated gate statistics.

In some embodiments, the control data used to calculate and update the spectral unmixing matrix in the computer cache is spectral data. The term spectral data is used herein in its conventional sense to refer to data signals which extend across one or more predetermined wavelength ranges. The spectral data signals may be generated by light measured by the photodetector at one or more different wavelengths, such as at 2 or more different wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light from particles in the flow stream at 400 or more different wavelengths. In certain instances, light from the sample is spectrally separated into 2 or more spectral ranges and each spectral range is detected in one or more photodetector channels, such as 3 or more spectral ranges, such as 4 or more, such as 8 or more, such as 16 or more, such as 32 or more, such as 64 or more, such as 128 or more, such as 256 or more and including 512 or more different spectral ranges. As such, the data signals that are generated are in response to light that have spectral ranges of 1 nm or more, such as 2 nm or more, such as 5 nm or more, such as 10 nm or more, such as 25 nm or more, such as 50 nm or more, such as 100 nm or more, such as 150 nm or more, such as 200 nm or more and including spectral ranges of light of 250 nm or more. In some embodiments, each spectral data signal may be generated in 1 or more spectral photodetector channels, such as 2 or more, such as 3 or more, such as 4 or more, such as 8 or more, such as 12 or more, such as 16 or more, such as 32 or and including in 64 or more different spectral photodetector channels. In some embodiments, spectral data may be generated in 1 or more imaging photodetector channels, such as 2 or more, such as 3 or more, such as 4 or more, such as 8 or more, such as 12 or more, such as 16 or more, such as 32 or and including in 64 or more different imaging photodetector channels.

In some instances, input controls include a negative population control and a single-positive population control for one or more single-stained fluorochromes in the fluorochrome panel. The terms "negative population" is used herein in its conventional sense to refer to a population of particles that is not labelled with a particular fluorochrome, such as an unstained sample for each dye or where a group of cells do not express an antigen that is being studied. In some instances, the negative population control (e.g., unstained population) allows for determination of background fluorescence and for setting up a negative control gating strategy. In some instances, the negative population control includes a reference unstained sample. In some instances, the negative population control for a single stained fluorochrome includes a population of particles that do not express an antigen of interest. In some instances, the negative population control is used to determine what is negative for a particular fluorochrome in the fluorochrome panel. In some instances, the negative population control is obtained from a reference database. In some instances, methods include obtaining a negative population control and a single-positive population control for each of the single-stained fluorochromes. The term "positive population" is used herein in its conventional sense to refer to samples containing particles stained with at least a single fluorochrome of interest such as where this positive population control can be used as a positive control. In some instances, the positive population control includes a single stained dye. In some instances, the positive population includes cells or particles that are known to include a specific binding antigen. In some embodiments, the single-positive population for a single-stained fluorochrome is a population of particles that have little to no detectable fluorescence for other fluorochromes, such as where the population is symmetrically distributed around zero in corresponding data channels. In some embodiments, methods include obtaining at least a single-positive population control for each of the single-stained fluorochromes. For each single-stained fluorochrome sample in a database of reference flow cytometry recordings (e.g., separate recordings of leukocytes singly stained with anti-CD4 conjugates of various fluorochromes), a negative population and a single-positive population are defined via gating or clustering (e.g., CD4+ vs CD- lymphocytes). A single reference unstained sample may be used as a negative reference population instead of in-recording negative populations. In some embodiments, the negative population and the positive population are assigned qualitative notations of abundance indicating positive and negative populations where expression patterns can include (+, +), (+, -), (-, +), (-, -), where "+" and "-" are qualitative notations of abundance indicating positive and negative populations, respectively and (+, -), e.g., means that the first marker is positive and the second negative.

In embodiments, methods include assessing a matrix quality parameter of the calculated spectral unmixing matrix. In some embodiments, the matrix quality parameter is assessed by visualizing data plots generated by the spectral unmixing matrix. For example, assessing the matrix quality parameters may include visualizing spectral plots for the fluorochromes used to generate the spectral unmixing matrix. In some instances, the spectral unmixing matrix is assessed based on gate statistics generated with the spectral unmixing matrix. In some instances, assessing a matrix quality parameter includes visualizing one or more spectral gates for the fluorochromes. In some instances, assessing the spectral unmixing matrix includes evaluating the spillover spread. In some instances, assessing the spectral unmixing matrix includes visualizing autofluorescence spectra collinearity in the generated data. In some instances, the visualization highlights the autofluorescence spectra that would be associated with variance in the generated data. In some instances, assessing the spectral unmixing matrix includes visualizing a panel hotspot matrix. In some instances, assessing the spectral unmixing matrix includes visualizing a diagonal visualization of the panel hotspot matrix. In some instances, assessing the spectral unmixing matrix includes visualizing a spread correlation matrix. In some instances, assessing the spectral unmixing matrix includes visualizing a cosine similarity matrix. In some instances, assessing the spectral unmixing matrix includes visualizing a covariance matrix.

In some instances, the calculated spectral unmixing matrix is assessed by determining the complexity index of the spectral unmixing matrix. The term "complexity index" is used herein in its conventional sense to refer to the measure of the similarity of the fluorochromes. In some instances, the complexity index is evaluated to determine whether it exceeds a predetermined threshold. In some instances, methods include determining the lowest complexity index of the fluorochromes and calculating the difference between the complexity index of the calculated spectral unmixing matrix and the lowest complexity index for the fluorochromes.

In some embodiments, assessing a matrix quality parameter of the calculated spectral unmixing matrix includes determining a similarity index for the spectral unmixing matrix. The term "similarity index" is used herein in its conventional sense to refer to the cosine similarity which is a measure of how similar the spectral signatures of two fluorophores are. In some instances, a cosine similarity matrix is calculated from single-stain positive controls, providing a pairwise comparison of the similarity between emission spectra of all fluorochromes employed in a staining panel. This cosine similarity matrix can be used to inform on the degree of similarity between fluorochromes. High cosine similarity scores (closer to 1) between fluorochrome pairs indicate higher compensation values and increased spillover spreading will occur between those two fluorochromes. Employing fluorochrome combinations that have low cosine similarity scores (closer to 0) results in lower compensation values and lower spillover spreading, yielding increased sensitivity to detect low expressing antigens within populations that co-express that pair of fluorochromes. In some instances, the similarity index ranges from 0 to 1. In some instances, methods include minimizing the spectral overlap between fluorochromes and adjusting the inputs so that the similarity index is minimized.

In some embodiments, assessing a matrix quality parameter of the calculated spectral unmixing matrix includes generating a hotspot matrix for the fluorochromes. The term "hotspot matrix" is used herein in its conventional sense to refer to a mechanism for mathematically describing and/or visualizing the impact of spread on autofluorescence (and/or fluorochromes). In select cases, the panel hotspot matrix serves as the above-described visualization. In some embodiments, the panel hotspot matrix is a diagonal matrix. The panel hotspot matrix may, in some instances, be calculated by obtaining a square root of the absolute value of the inverse matrix (e.g., gramian inverse). Calculation of a panel hotspot matrix may result in two different metrics: pseudoinverse matrix row norms and off-diagonal entries. Pseudoinverse matrix row norms (i.e., diagonals of the panel hotspot matrix) indicate which autofluorescence (and/or fluorochromes) are most impacted by unmixing-dependent spread. In some cases, diagonal entries are the 2-norm of each autofluorescence (and/or fluorochrome) pseudoinverse row. In some versions, the pseudoinverse matrix row norms may be represented on a scale corresponding to the factor by which the standard deviation of unmixed data in that autofluorescence (and/or fluorochrome) would be amplified as a result of unmixing in this panel. For example, 1 corresponds to no impact, while 2 corresponds to 2x the spread, and so on. Inspection of off-diagonal entries in the full panel hotspot matrix reveals problematic combinations of autofluorescence (and/or fluorochromes) in the panel. Off-diagonal entries are the dot product of the corresponding row and column autofluorescence (and/or fluorochromes) spectra pseudoinverse rows. Off-diagonal values indicate the magnitude of covariance between two autofluorescence (and/or fluorochromes) spectra pseudoinverse matrix entries. For example, in some embodiments, an off-diagonal value of 0 denotes no covariance, while higher values denote correspondingly higher levels of covariance.

In some embodiments, methods include assessing similarity index, complexity index or performing a hotspot analysis (to generate a hotspot matrix) as described in U.S. Patent Publication No. 2023/0393049 filed on May 24, 2023, the disclosure of which is herein incorporated by reference.

In some embodiments, assessing a matrix quality parameter of the calculated spectral unmixing parameter includes evaluating variance decomposition proportions (VDPs). In some instances, assessing a matrix quality parameter of the calculated spectral unmixing parameter includes evaluating variance decomposition proportion by singular value decomposition (SVD). In some instances, the variance decomposition proportion is used to identify collinearity in the spectra of the fluorochromes. In some instances, the variance decomposition proportion is used to assess collinearity of autofluorescence spectra calculated from the inputted control data. In some instances, the condition index is calculated as a ratio of the largest calculated singular value to each individually calculated singular value. In some instances, methods include identifying the variance decomposition proportions that correspond to a condition index of 10 or more, such as 11 or more, such as 12 or more, such as 13 or more, such as 14 or more, such as 15 or more, such as 16 or more, such as 17 or more, such as 18 or more, such as 19 or more, such as 20 or more, such as 21 or more, such as 22 or more, such as 23 or more, such as 24 or more, such as 25 or more, such as 26 or more, such as 27 or more, such as 28 or more, such as 29 or more, such as 30 or more and including identifying the variance decomposition proportions that correspond to a condition index of 35 or more. In some instances, methods include identifying the control spectra whose variance decomposition proportions for that condition index exceeds a large fraction, such as 0.3 or more, such as 0.4 or more, such as 0.5 or more, such as 0.6 or more and including 0.7 or more. In certain instances, methods include identifying the control spectra that have a variance decomposition proportion of greater than 0.3 and a condition index of greater than 15.

In certain cases, assessing a matrix quality parameter of the spectral unmixing matrix includes evaluating a spread correlation matrix. As described herein, the "spread correlation matrix" is a mechanism for mathematically describing and/or visualizing the impact of particular fluorescence or autofluorescence spectra on certain populations of data, such as double-negative populations. In embodiments, the spread correlation matrix may be used to predict tilt in double negative populations. "Tilt" is referred to herein as a measure describing the extent to which populations (e.g., double negative populations) are shifted in a particular direction (e.g., corresponding to a positive or negative correlation) due to the manner in which the data was collected and/or prepared. In some embodiments, preparing the spread correlation matrix includes treating the gramian inverse as a covariance matrix and normalizing each row and column to the square root of its diagonal element to calculate a correlation matrix.

In embodiments, one or more matrix quality parameter of the spectral unmixing matrix is assessed, such as 2 or more, such as 3 or more, such as 4 or more, such as 5 or more, such as 6 or more, such as 7 or more and including 8 or more matrix quality parameters of the spectral unmixing matrix are assessed.

In some embodiments, a cached input of the spectral unmixing matrix is adjusted based on one or more of the assessed matrix quality parameters. In some instances, methods include determining whether the cache includes results for one or more control data used in calculating the spectral unmixing matrix. Where no results are cached for a control, methods include computing statistics and results for the control data. In some instances, methods include making a change to a single stain positive control. In some instances, a different single stain positive control is used (i.e., one single stain positive control is replaced for another). In some instances, methods include changing from using control data generated with single stain control beads to using control data generated with single stain control cells. In some instances, methods include recalculating control statistics or computations after adding or excluding a positive or negative control to the computations of the spectral unmixing matrix.

In some instances, methods include making a change to the autofluorescence control data. In some instances, an autofluorescence gate is included or excluded from the calculations of the spectral unmixing matrix. In some instances, an autofluorescence spectra of a set of autofluorescence spectra is adjusted by switching out an autofluorescence spectra for a different autofluorescence spectra in the spectral unmixing matrix. In some instances, methods include switching out a single autofluorescence spectrum in the set of autofluorescence spectra. In certain cases, methods include maintaining a set of autofluorescence spectra having a constant size. For example, an assessed set of autofluorescence spectra having N autofluorescence spectra will continue to have N autofluorescence spectra following adjustment. In certain instances, an autofluorescence spectrum in the set of autofluorescence spectra is not swapped out for an autofluorescence spectrum that is already within the set of autofluorescence spectra. In some instances, methods include identifying autofluorescence spectra in the set of autofluorescence spectra that are associated with variance generated using the set of autofluorescence spectra such as by analyzing the calculated inverse matrix. In some embodiments, methods include determining autofluorescence controls which are associated with a less variance and clearing an autofluorescence control from the cache and inputting the autofluorescence control which is less associated with variance. In some cases, methods include clearing the autofluorescence control having autofluorescence spectra that are more associated with variance.

In some instances, the spectral unmixing matrix is recalculated when the adjusted input includes a change in the input that is equal to or below a predetermined threshold. In some instances, the spectral unmixing matrix is recalculated when the adjusted input includes a change in the input that is above a predetermined threshold. In some instances, a computed input is retrieved from the computer cache before adjusting the input. In some instances, a cached input is cleared before adjusting the input. In some instances, methods include clearing a cached input and applying a new input into the spectral unmixing matrix. In some instances, adjusting a cached input includes excluding certain control data when recalculating the spectral unmixing matrix. In some instances, adjusting a cached input includes applying new control data when recalculating the spectral unmixing matrix. In some instances, adjusting a cached input includes changing an autofluorescence gate of autofluorescence control data when recalculating the spectral unmixing matrix.

In some embodiments, methods include storing input control data in the computer cache and generating one or more of input control data computations and input control data statistics from the stored input control data. In some instances, the method further includes clearing the stored input control data from the computer cache when an adjustment is made to the input control data. In some instances, methods include determining whether an input control data is stored in the computer cache. In some instances, control data computations and control data statistics are generated when the input control data is determined to be not present in the computer cache and the generated control data computations and control data statistics are stored in the computer cache. In some instances, the method includes determining that the input control data comprises an uncached negative control, generating data computations and data statistics for the uncached negative control; and caching the data computations and data statistics for the uncached negative control. In some instances, the method includes determining that the input control data comprises a cached negative control, retrieving data computations and data statistics for the cached negative control; and recalculating data computations and data statistics for the cached negative control. In some instances, methods include determining that the input control data comprises an uncached negative control, retrieving input control data comprising a cached negative control; and generating data computations and data statistics for the uncached negative control and the cached negative control. In certain instances, the spectral unmixing matrix is recalculated with the updated input control data that is stored in the cache.

As described above, methods include recalculating the spectral unmixing matrix with the adjusted input. In some instances, the spectral unmixing matrix is recalculated in near real-time as the control data inputs (including raw control data, data computations or data statistics) are adjusted, such as where the spectral unmixing matrix is recalculated 1 second or less after the control data inputs are adjusted, such as after 0.5 seconds or less, such as after 0.1 seconds or less, such as after 0.05 seconds or less, such as after 0.01 seconds or less, such as after 0.005 seconds or less, such as after 0.001 seconds or less, such as after 0.0005 seconds or less and including after 0.0001 seconds or less. In certain instances, the spectral unmixing matrix is recalculated immediately as the control data inputs are adjusted, such as where the spectral unmixing matrix is updated in real time. In some embodiments, two or more inputs are adjusted and then the spectral unmixing matrix is recalculated, such as 3 or more, such as 4 or more, such as 5 or more, such as 6 or more and including 10 or more different inputs are adjusted. In some instances, the recalculation is initiated by the user of the graphical user interface such as through a user interactable icon on the graphical user interface to recalculate the spectral unmixing matrix after making 2 or more different adjustments to the inputted control data.

In some embodiments, methods include updating the matrix quality parameters in response to the recalculated spectral unmixing matrix. In some instances, the recalculated the spectral unmixing matrix is cached and updates the matrix quality parameters automatically for the recalculated spectral unmixing matrix. In some instances, the updated matrix quality parameters are displayed on the graphical user interface of a display. In some instances, the matrix quality parameters are updated on the graphical user interface in near real time, such as where the matrix quality parameters are updated 1 second or less after the control data inputs (including raw control data, data computations or data statistics) are adjusted, such as after 0.5 seconds or less, such as after 0.1 seconds or less, such as after 0.05 seconds or less, such as after 0.01 seconds or less, such as after 0.005 seconds or less, such as after 0.001 seconds or less, such as after 0.0005 seconds or less and including after 0.0001 seconds or less. In certain instances, the updated matrix quality parameters are displayed concurrently as the control data inputs are adjusted, such as where the matrix quality parameters are updated and displayed in real time. Thus, the adjustments to the input control data or computations can provide intuitive changes to the matrix quality parameters which can be immediately visualized and further adjusted as desired. In some embodiments, two or more inputs are adjusted and then the matrix quality parameters are updated, such as 3 or more, such as 4 or more, such as 5 or more, such as 6 or more and including where 10 or more different inputs are adjusted and then the matrix quality parameters are updated and displayed.

In certain embodiments, methods include further adjusting one or more inputs based on recalculated spectral unmixing matrix. In some instances, one or more of the updated matrix quality parameters are assessed and input control data or computations may be further adjusted. This process may be repeated 2 or more times using the graphical user interface while visualizing the updated matrix quality parameters of the cached recalculated spectral unmixing matrix, such as 3 or more times, such as 4 or more times, such as 5 or more times, such as 10 or more times, such as 20 or more times and including 50 or more times. In some instances, one or more inputs are iteratively adjusted and the updated matrix quality parameters are assessed in order to optimize the spectral unmixing matrix as desired.

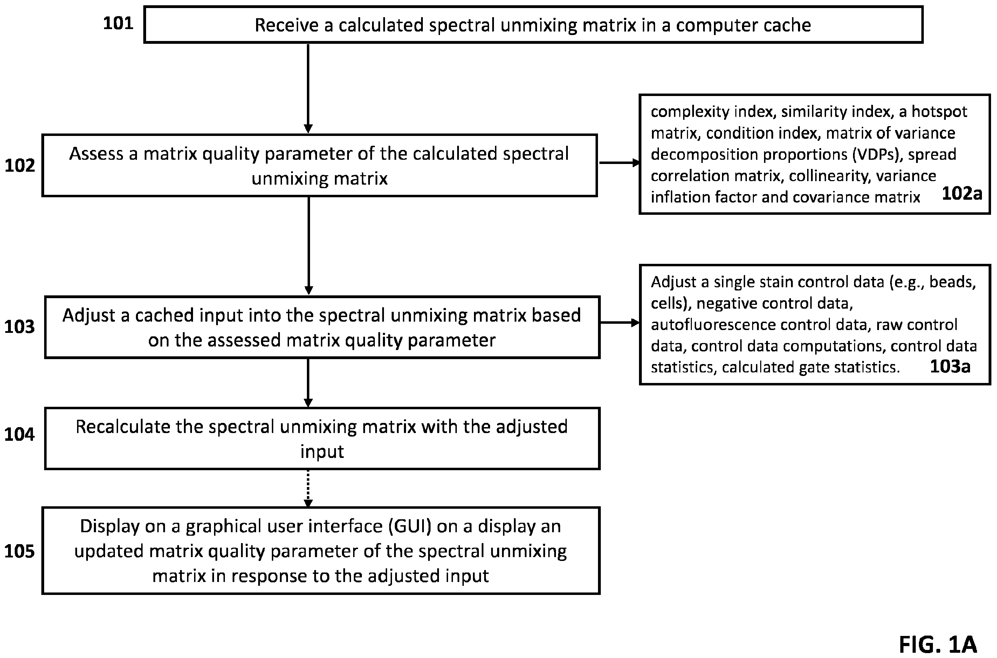

Figure 1A depicts a flow chart for assessing and adjusting a spectral unmixing matrix according to certain embodiments. At step 101, a calculated spectral unmixing matrix is received in a computer cache. The cache may be present in the CPU or hard drive of a local computer (CPU or hard drive cache) or may be a remote cache such as where the spectral unmixing matrix is cached on a local or remote server (server cache). One or more matrix quality parameters of the calculated spectral unmixing matrix are assessed at step 102. In some instances, the quality indicators that are computed and assessed include complexity index, similarity index (cosine similarity matrix) or a hotpsot matrix. In certain instances, autofluorescence collinearity such as by variance decomposition proportion and condition number is assessed as a quality indicator of the spectral unmixing matrix. (Step 102a) A cached input is adjusted based on the assessed matrix quality parameters at Step 103. In some instances, the cached input includes computations or statistics from the control data. In certain instances, control data may be added, excluded or changed such as single stain control data, negative control data, autofluorescence control data as well as calculated gate statistics. (Step 103a) In some instances, where a control is not yet cached methods include retrieving the control data or computation to the cache before making adjustments and recalculating the spectral unmixing matrix. The spectral unmixing matrix is recalculated with the adjusted inputs at Step 104. Updated matrix quality parameters are displayed on a graphical user interface at Step 105. In some instances, the matrix quality parameters are updated and displayed concurrently while adjusting the inputs of the spectral unmixing matrix on the graphical user interface such that the process occurs in real time.

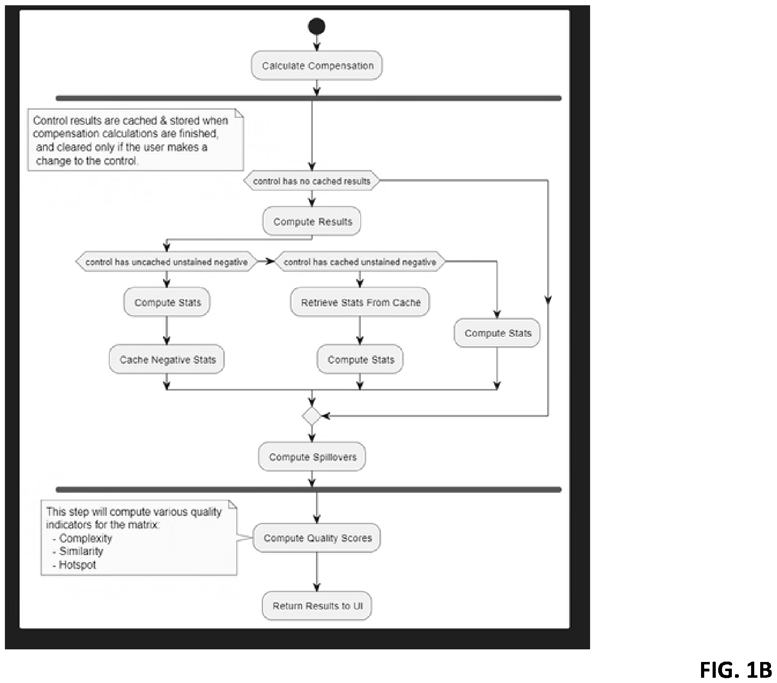

Figure 1B depicts a flow diagram of adjusting a spectral unmixing matrix in a computer cache according to certain embodiments. In the computer cache, a spectral unmixing matrix is received and spillovers are computed to generate matrix quality parameters. Here, control results are cached and stored when calculation of spectral unmixing matrix are completed. In some embodiments, a control remains in the cache until the control is changed or cleared from the cache by a user. To start, compensation results for a fluorochrome panel is calculated and received by the computer cache. Next, a determination is made whether a control used for the fluorochrome panel has cached results. Where a control has no cached results, results are computed for one or more input control data. In some instances, the control has uncached unstained negative control data. In these instances, statistics for the uncached unstained negative control data is computed and the negative control statistics are then cached. Where the control has cached unstained negative control data, the computed statistics are retrieved and then further statistics may be computed from updated control data. Spillovers are computed in the cache to calculate the spectral unmixing matrix. Based on the calculated spectral unmixing matrix, matrix quality parameters which are indicators of the quality of the matrix such as complexity, similarity and hotspot are returned to the user through a graphical user interface. Based on the assessed matrix quality indicators, one or more of the cached controls may be adjusted, excluded or an uncached control may be added to the cache in order to adjust the spectral unmixing matrix. Since the control data and computed spillovers (used to calculate the spectral unmixing matrix) are maintained in the computer cache, the results of the updates to the matrix quality indicators can be returned to the graphical user interface immediately in real time. In some instances, one or more adjustments is made to a cached control iteratively through the graphical user interface and iterative updates to the matrix quality indicators are assessed to identify the optimal spectral unmixing matrix.

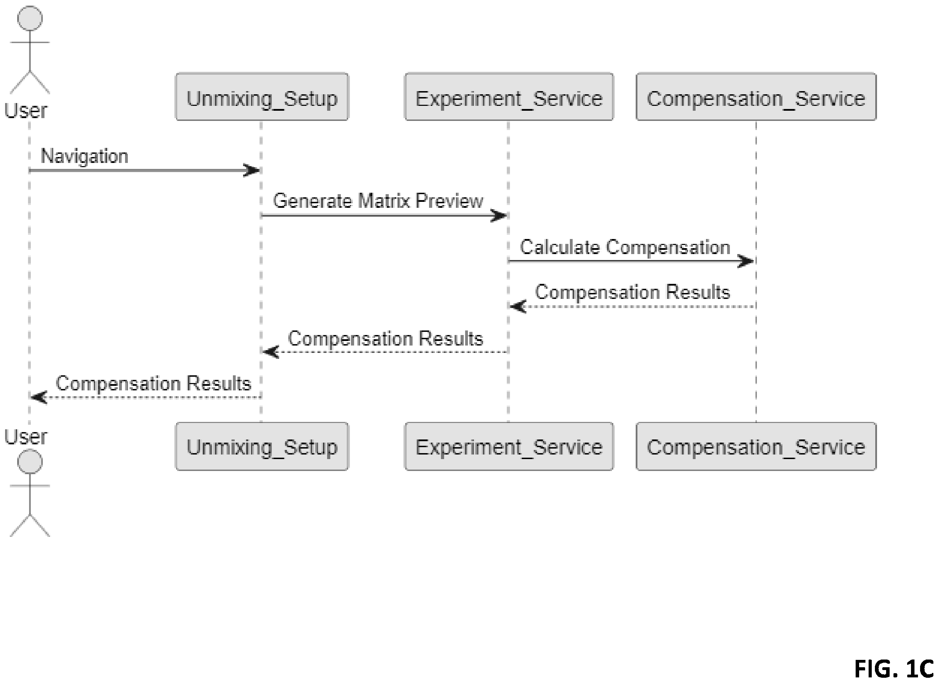

Figure 1C depicts a workflow for setting up an unmixing experiment to calculate compensation results for a fluorochrome panel according to certain embodiments. In the workflow, compensation results are generated and returned to the user which can then use the compensation results to calculate and optimize a spectral unmixing matrix as described herein. Using the graphical user interface, an unmixing experiment is set up generating a preview of the unmixing matrix. Compensation results are calculated and returned back to the user, such as into the computer cache. As described above, based on matrix quality parameters assessed for the calculated spectral unmixing matrix, control data and computations can be adjusted in the computer cache to provide for real time adjustments to the spectral unmixing matrix.

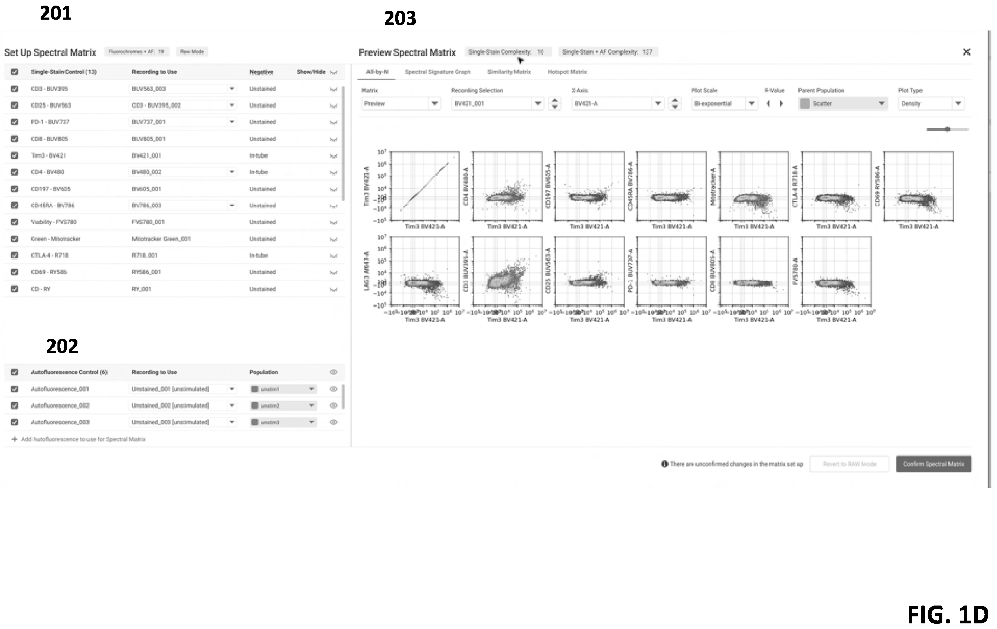

Figure 1D depicts an example of a graphical user interface for assessing matrix quality parameters and adjustments for a spectral unmixing matrix according to certain embodiments. The graphical user interface includes a user interactable panels for making changes to cached control data and computations and visualizing matrix quality indicators of the recalculated spectral unmixing matrix. The graphical user interface includes Set Up Spectral Matrix panel 201 that lists control data and computations for setting up the spectral unmixing matrix. Here, one or more control data or computation inputs can be retrieved for, adjusted or excluded from the computer cache to change the calculated matrix. Autofluorescence data controls can also be adjusted in the Set Up Spectral Matrix panel at 202. A matrix preview is shown at Preview Spectral Matrix panel 203 which allows the user to visualize data plots (e.g., biexponential plots, scatter plots) as well as to visualize updated matrix quality parameters such as spectral signature graphs, similarity matrix or a hotspot matrix. The Preview Spectral Matrix panel updates in real time as changes are made to the Set Up Spectral Matrix section.

In certain embodiments, methods further include generating spectral data for calculating compensation and the spectral unmixing matrix for a panel of fluorochromes. In some instances, methods include generating spectral data for one or more controls as described hereinabove. For example, methods in some instances include generating spectral data for single stain positive controls. In some instances, methods include generating spectral data for negative controls. In some instances, methods include generating spectral data for autofluorescence controls. In some instances, methods include generating spectral data with positive control single stain beads. In some instances, methods include generating spectral data with positive control single stain cells. In practicing the subject methods according to certain embodiments, a sample having particles (e.g., single stain beads, single stain cells, unstained beads, unstained cells) is irradiated with light from a light source. In some embodiments, the light source is a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Where methods include irradiating with a broadband light source, broadband light source protocols of interest may include, but are not limited to, a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof.

In other embodiments, methods includes irradiating with a narrow band light source emitting a particular wavelength or a narrow range of wavelengths, such as for example with a light source which emits light in a narrow range of wavelengths like a range of 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Where methods include irradiating with a narrow band light source, narrow band light source protocols of interest may include, but are not limited to, a narrow wavelength LED, laser diode or a broadband light source coupled to one or more optical bandpass filters, diffraction gratings, monochromators or any combination thereof.

In certain embodiments, methods include irradiating the sample with one or more lasers. As discussed above, the type and number of lasers will vary depending on the sample as well as desired light collected and may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof. In others instances, the methods include irradiating the flow stream with a dye laser, such as a stilbene, coumarin or rhodamine laser. In yet other instances, methods include irradiating the flow stream with a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, methods include irradiating the flow stream with a solid-state laser, such as a ruby laser, an Nd:YAG laser, NdCrYAG laser, Er:YAG laser, Nd:YLF laser, Nd:YVO₄ laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The sample may be irradiated with one or more of the above-mentioned light sources, such as 2 or more light sources, such as 3 or more light sources, such as 4 or more light sources, such as 5 or more light sources and including 10 or more light sources. The light source may include any combination of types of light sources. For example, in some embodiments, the methods include irradiating the sample in the flow stream with an array of lasers, such as an array having one or more gas lasers, one or more dye lasers and one or more solid-state lasers.

The sample may be irradiated with wavelengths ranging from 200 nm to 1500 nm, such as from 250 nm to 1250 nm, such as from 300 nm to 1000 nm, such as from 350 nm to 900 nm and including from 400 nm to 800 nm. For example, where the light source is a broadband light source, the sample may be irradiated with wavelengths from 200 nm to 900 nm. In other instances, where the light source includes a plurality of narrow band light sources, the sample may be irradiated with specific wavelengths in the range from 200 nm to 900 nm. For example, the light source may be plurality of narrow band LEDs (1 nm - 25 nm) each independently emitting light having a range of wavelengths between 200 nm to 900 nm. In other embodiments, the narrow band light source includes one or more lasers (such as a laser array) and the sample is irradiated with specific wavelengths ranging from 200 nm to 700 nm, such as with a laser array having gas lasers, excimer lasers, dye lasers, metal vapor lasers and solid-state laser as described above.

Where more than one light source is employed, the sample may be irradiated with the light sources simultaneously or sequentially, or a combination thereof. For example, the sample may be simultaneously irradiated with each of the light sources. In other embodiments, the flow stream is sequentially irradiated with each of the light sources. Where more than one light source is employed to irradiate the sample sequentially, the time each light source irradiates the sample may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the sample with the light source (e.g. laser) for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where sample is sequentially irradiated with two or more light sources, the duration sample is irradiated by each light source may be the same or different.

The time period between irradiation by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each light source is 10 microseconds. In embodiments where sample is sequentially irradiated by more than two (i.e., 3 or more) light sources, the delay between irradiation by each light source may be the same or different.

The sample may be irradiated continuously or in discrete intervals. In some instances, methods include irradiating the sample in the sample with the light source continuously. In other instances, the sample in is irradiated with the light source in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the light source, the sample may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In certain embodiments, methods include irradiating the sample with two or more beams of frequency shifted light. As described above, a light beam generator component may be employed having a laser and an acousto-optic device for frequency shifting the laser light. In these embodiments, methods include irradiating the acousto-optic device with the laser. Depending on the desired wavelengths of light produced in the output laser beam (e.g., for use in irradiating a sample in a flow stream), the laser may have a specific wavelength that varies from 200 nm to 1500 nm, such as from 250 nm to 1250 nm, such as from 300 nm to 1000 nm, such as from 350 nm to 900 nm and including from 400 nm to 800 nm. The acousto-optic device may be irradiated with one or more lasers, such as 2 or more lasers, such as 3 or more lasers, such as 4 or more lasers, such as 5 or more lasers and including 10 or more lasers. The lasers may include any combination of types of lasers. For example, in some embodiments, the methods include irradiating the acousto-optic device with an array of lasers, such as an array having one or more gas lasers, one or more dye lasers and one or more solid-state lasers.

Where more than one laser is employed, the acousto-optic device may be irradiated with the lasers simultaneously or sequentially, or a combination thereof. For example, the acousto-optic device may be simultaneously irradiated with each of the lasers. In other embodiments, the acousto-optic device is sequentially irradiated with each of the lasers. Where more than one laser is employed to irradiate the acousto-optic device sequentially, the time each laser irradiates the acousto-optic device may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the acousto-optic device with the laser for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where the acousto-optic device is sequentially irradiated with two or more lasers, the duration the acousto-optic device is irradiated by each laser may be the same or different.

The time period between irradiation by each laser may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each laser is 10 microseconds. In embodiments where the acousto-optic device is sequentially irradiated by more than two (i.e., 3 or more) lasers, the delay between irradiation by each laser may be the same or different.

The acousto-optic device may be irradiated continuously or in discrete intervals. In some instances, methods include irradiating the acousto-optic device with the laser continuously. In other instances, the acousto-optic device is irradiated with the laser in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the laser, the acousto-optic device may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In some embodiments, methods include applying radiofrequency drive signals to the acousto-optic device to generate angularly deflected laser beams. Two or more radiofrequency drive signals may be applied to the acousto-optic device to generate an output laser beam with the desired number of angularly deflected laser beams, such as 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including 100 or more radiofrequency drive signals.

The angularly deflected laser beams produced by the radiofrequency drive signals each have an intensity based on the amplitude of the applied radiofrequency drive signal. In some embodiments, methods include applying radiofrequency drive signals having amplitudes sufficient to produce angularly deflected laser beams with a desired intensity. In some instances, each applied radiofrequency drive signal independently has an amplitude from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. In some instances, each applied radiofrequency drive signal independently has an amplitude from about 0.001 V to 100 V, such as from about 0.001 V to 200 V, such as from 0.001 V to 300 V, such as from 0.001 V to 400 V and including from 0.001 V to 500 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz. Each applied radiofrequency drive signal has, in some embodiments, a frequency of from about 0.001 MHz to about 100 MHz, such as from 0.001 MHz to 200 MHz, such as from 0.001 MHz to 300 MHz, such as from 0.001 MHz to 400 MHz, such as from 0.001 MHz to 500 MHz.

In these embodiments, the angularly deflected laser beams in the output laser beam are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, the angularly deflected laser beams overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, the flow stream is irradiated with a plurality of beams of frequency-shifted light and particles in the flow stream are imaged such as described in Diebold, et al. Nature Photonics Vol. 7(10); 806-810 (2013), as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference.

In practicing the subject methods, light from each particle is detected by a light detection system. In embodiments, light detection systems include one or more photodetectors, such as 2 or more, such as 3 or more, such as 4 or more, such as 5 or more, such as 6 or more, such as 7 or more, such as 8 or more, such as 9 or more and including 10 or more photodetectors. Photodetectors for practicing the subject methods may be any convenient light detecting protocol, including but not limited to photosensors or photodetectors, such as avalanche photodiodes (APDs), active-pixel sensors (APSs), quadrant photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In certain embodiments, the photodetector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm². Light from the irradiated sample is detected in two or more photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including 512 or more photodetector channels.

Light may be measured by the photodetector at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light from particles in the flow stream at 400 or more different wavelengths. Light may be measured continuously or in discrete intervals. In some instances, detectors of interest are configured to take measurements of the light continuously. In other instances, detectors of interest are configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

In certain embodiments, light detected from the sample is scattered light. The term "scattered light" is used herein in its conventional sense to refer to the propagation of light energy from particles in the sample (e.g., flowing in a flow stream) that are deflected from the incident beam path, such as by reflection, refraction or deflection of the beam of light. In certain instances, scattered light detected from the particles in the flow stream is forward scattered light (FSC). In other instances, scattered light detected from the particles in the flow stream is side scattered light (SSC). In yet other instances, scattered light detected from the particles in the flow stream is backscattered light (BSC).

In some embodiments, light detected from each particle in the sample is transmitted light, such as light detected with a brightfield light detector. In other embodiments, light detected from each particle in the sample is emitted light, such as particle luminescence (i.e., fluorescence or phosphorescence), as described in greater detail below.

In some embodiments, autofluorescence that is generated by the irradiated particles is measured. The term "autofluorescence" is used herein in its conventional sense to refer to the emission of light from structures or components of the particle (e.g., cellular components within a cell) when irradiated by a light source. The autofluorescence does not come from and is distinct from added fluorescent markers. In some instances, the particles are cells and autofluorescence from the cells include light emission from autofluorescencing molecules such as NADPH, flavins, proteins and amino acids such as tryptophan, tyrosine and phenyalanine. In certain instances, autofluorescence from cells include light emission from intrinsic properties of collagen or elastin. The autofluorescence of the particle may differ, in some instances, depending on the state of the cell, such as where the cell is unstimulated, stimulated, activated or some other biological or physical state. In some instances, methods include assessing the collinearity of the autofluorescence spectra from particles such as cellular autofluorescence. In some embodiments, the contribution of autofluorescence spectra to the spectral unmixing matrix is accounted for and reduced and eliminated as desired.

In some instances, the sample includes 2 or more different types of particles, such as 3 or more, such as 4 or more, such as 5 or more, such as 10 or more, such as 15 or more, such as 25 or more, such as 50 or more, such as 75 or more and including 100 or more different types of particles. In some instances, the particles are cells. In some instances, the cells are in two or more different states, such as where one or more of the cells are stimulated, unstimulated, activated and un-activated.

In some embodiments, particles in the sample include one or more fluorochromes which emit fluorescence in response to irradiation by the light source. In some embodiments, each particle of a control sample includes a single type of fluorochrome (i.e., a single stain control). In other embodiments, each particle may include 2 or more fluorochromes, such as 3 or more, such as 4 or more, such as 5 or more, such as 6 or more, such as 7 or more, such as 8 or more, such as 9 or more and including 10 or more fluorochromes. The subject fluorochrome panels may include any suitable set of fluorochromes. Fluorochromes of interest according to certain embodiments have excitation maxima that range from 100 nm to 800 nm, such as from 150 nm to 750 nm, such as from 200 nm to 700 nm, such as from 250 nm to 650 nm, such as from 300 nm to 600 nm and including from 400 nm to 500 nm. Fluorochromes of interest according to certain embodiments have emission maxima that range from 400 nm to 1000 nm, such as from 450 nm to 950 nm, such as from 500 nm to 900 nm, such as from 550 nm to 850 nm and including from 600 nm to 800 nm. In certain instances, the fluorochrome is a light emitting dye such as a fluorescent dye having a peak emission wavelength of 200 nm or more, such as 250 nm or more, such as 300 nm or more, such as 350 nm or more, such as 400 nm or more, such as 450 nm or more, such as 500 nm or more, such as 550 nm or more, such as 600 nm or more, such as 650 nm or more, such as 700 nm or more, such as 750 nm or more, such as 800 nm or more, such as 850 nm or more, such as 900 nm or more, such as 950 nm or more, such as 1000 nm or more and including 1050 nm or more. For example, the fluorochrome may be a fluorescent dye having a peak emission wavelength that ranges from 200 nm to 1200 nm, such as from 300 nm to 1100 nm, such as from 400 nm to 1000 nm, such as from 500 nm to 900 nm and including a fluorescent dye having a peak emission wavelength of from 600 nm to 800 nm.

In some embodiments, fluorochromes of interest may include but are not limited to dyes suitable for use in analytical applications (e.g., flow cytometry, imaging, etc.) , such as an acridine dye, anthraquinone dyes, arylmethane dyes, diarylmethane dyes (e.g., diphenyl methane dyes), chlorophyll containing dyes, triarylmethane dyes (e.g., triphenylmethane dyes), azo dyes, diazonium dyes, nitro dyes, nitroso dyes, phthalocyanine dyes, cyanine dyes, asymmetric cyanine dyes, quinon-imine dyes, azine dyes, eurhodin dyes, safranin dyes, indamins, indophenol dyes, fluorine dyes, oxazine dye, oxazone dyes, thiazine dyes, thiazole dyes, xanthene dyes, fluorene dyes, pyronin dyes, fluorine dyes, rhodamine dyes, phenanthridine dyes, as well as dyes combining two or more of the aforementioned dyes (e.g., in tandem), polymeric dyes having one or more monomeric dye units and mixtures of two or more of the aforementioned dyes thereof. A large number of dyes are commercially available from a variety of sources, such as, for example, Molecular Probes (Eugene, OR), Dyomics GmbH (Jena, Germany), Sigma-Aldrich (St. Louis, MO), Sirigen, Inc. (Santa Barbara, CA) and Exciton (Dayton, OH). For example, the fluorophore may include 4-acetamido-4'-isothiocyanatostilbene-2,2'disulfonic acid; acridine and derivatives such as acridine, acridine orange, acridine yellow, acridine red, and acridine isothiocyanate; allophycocyanin, phycoerythrin, peridinin-chlorophyll protein, 5-(2'-aminoethyl)aminonaphthalene-1-sulfonic acid (EDANS); 4-amino-N-[3-vinylsulfonyl)phenyl]naphthalimide-3,5 disulfonate (Lucifer Yellow VS); N-(4-anilino-1-naphthyl)maleimide; anthranilamide; Brilliant Yellow; coumarin and derivatives such as coumarin, 7-amino-4-methylcoumarin (AMC, Coumarin 120), 7-amino-4-trifluoromethylcouluarin (Coumaran 151); cyanine and derivatives such as cyanosine, Cy3, Cy3.5, Cy5, Cy5.5, and Cy7; 4',6-diaminidino-2-phenylindole (DAPI); 5', 5"-dibromopyrogallol-sulfonephthalein (Bromopyrogallol Red); 7-diethylamino-3-(4'-isothiocyanatophenyl)-4-methylcoumarin; diethylaminocoumarin; diethylenetriamine pentaacetate; 4,4'-diisothiocyanatodihydro-stilbene-2,2'-disulfonic acid; 4,4'-diisothiocyanatostilbene-2,2'-disulfonic acid; 5-[dimethylamino]naphthalene-1-sulfonyl chloride (DNS, dansyl chloride); 4-(4'-dimethylaminophenylazo)benzoic acid (DABCYL); 4-dimethylaminophenylazophenyl-4'-isothiocyanate (DABITC); eosin and derivatives such as eosin and eosin isothiocyanate; erythrosin and derivatives such as erythrosin B and erythrosin isothiocyanate; ethidium; fluorescein and derivatives such as 5-carboxyfluorescein (FAM), 5-(4,6-dichlorotriazin-2-yl)aminofluorescein (DTAF), 2'7'-dimethoxy-4'5'-dichloro-6-carboxyfluorescein (JOE), fluorescein isothiocyanate (FITC), fluorescein chlorotriazinyl, naphthofluorescein, and QFITC (XRITC); fluorescamine; IR144; IR1446; Green Fluorescent Protein (GFP); Reef Coral Fluorescent Protein (RCFP); Lissamine^{™}; Lissamine rhodamine, Lucifer yellow; Malachite Green isothiocyanate; 4-methylumbelliferone; ortho cresolphthalein; nitrotyrosine; pararosaniline; Nile Red; Oregon Green; Phenol Red; B-phycoerythrin; o-phthaldialdehyde; pyrene and derivatives such as pyrene, pyrene butyrate and succinimidyl 1-pyrene butyrate; Reactive Red 4 (Cibacron^{™} Brilliant Red 3B-A); rhodamine and derivatives such as 6-carboxy-X-rhodamine (ROX), 6-carboxyrhodamine (R6G), 4,7-dichlororhodamine lissamine, rhodamine B sulfonyl chloride, rhodamine (Rhod), rhodamine B, rhodamine 123, rhodamine X isothiocyanate, sulforhodamine B, sulforhodamine 101, sulfonyl chloride derivative of sulforhodamine 101 (Texas Red), N,N,N',N'-tetramethyl-6-carboxyrhodamine (TAMRA), tetramethyl rhodamine, and tetramethyl rhodamine isothiocyanate (TRITC); riboflavin; rosolic acid and terbium chelate derivatives; xanthene; dye-conjugated polymers (i.e., polymer-attached dyes) such as fluorescein isothiocyanate-dextran as well as dyes combining two or more dyes (e.g., in tandem), polymeric dyes having one or more monomeric dye units and mixtures of two or more of the aforementioned dyes or combinations thereof.

In some instances, the fluorophore (i.e., dye) is a fluorescent polymeric dye. Fluorescent polymeric dyes that find use in the subject methods and systems are varied. In some instances of the method, the polymeric dye includes a conjugated polymer. Conjugated polymers (CPs) are characterized by a delocalized electronic structure which includes a backbone of alternating unsaturated bonds (e.g., double and/or triple bonds) and saturated (e.g., single bonds) bonds, where π-electrons can move from one bond to the other. As such, the conjugated backbone may impart an extended linear structure on the polymeric dye, with limited bond angles between repeat units of the polymer. For example, proteins and nucleic acids, although also polymeric, in some cases do not form extended-rod structures but rather fold into higher-order three-dimensional shapes. In addition, CPs may form "rigid-rod" polymer backbones and experience a limited twist (e.g., torsion) angle between monomer repeat units along the polymer backbone chain. In some instances, the polymeric dye includes a CP that has a rigid rod structure. As summarized above, the structural characteristics of the polymeric dyes can have an effect on the fluorescence properties of the molecules.

Any convenient polymeric dye may be utilized in the subject methods and systems. In some instances, a polymeric dye is a multichromophore that has a structure capable of harvesting light to amplify the fluorescent output of a fluorophore. In some instances, the polymeric dye is capable of harvesting light and efficiently converting it to emitted light at a longer wavelength. In some cases, the polymeric dye has a light-harvesting multichromophore system that can efficiently transfer energy to nearby luminescent species (e.g., a "signaling chromophore"). Mechanisms for energy transfer include, for example, resonant energy transfer (e.g., Forster (or fluorescence) resonance energy transfer, FRET), quantum charge exchange (Dexter energy transfer) and the like. In some instances, these energy transfer mechanisms are relatively short range; that is, close proximity of the light harvesting multichromophore system to the signaling chromophore provides for efficient energy transfer. Under conditions for efficient energy transfer, amplification of the emission from the signaling chromophore occurs when the number of individual chromophores in the light harvesting multichromophore system is large; that is, the emission from the signaling chromophore is more intense when the incident light (the "excitation light") is at a wavelength which is absorbed by the light harvesting multichromophore system than when the signaling chromophore is directly excited by the pump light.

The multichromophore may be a conjugated polymer. Conjugated polymers (CPs) are characterized by a delocalized electronic structure and can be used as highly responsive optical reporters for chemical and biological targets. Because the effective conjugation length is substantially shorter than the length of the polymer chain, the backbone contains a large number of conjugated segments in close proximity. Thus, conjugated polymers are efficient for light harvesting and enable optical amplification via energy transfer.

In some instances, the polymer may be used as a direct fluorescent reporter, for example fluorescent polymers having high extinction coefficients, high brightness, etc. In some instances, the polymer may be used as a strong chromophore where the color or optical density is used as an indicator.

Polymeric dyes of interest include, but are not limited to, those dyes described by Gaylord et al. in US Publication Nos. 20040142344, 20080293164, 20080064042, 20100136702, 20110256549, 20120028828, 20120252986, 20130190193 and 20160025735 the disclosures of which are herein incorporated by reference in their entirety; and Gaylord et al., J. Am. Chem. Soc., 2001, 123 (26), pp 6417-6418; Feng et al., Chem. Soc. Rev., 2010,39, 2411-2419; and Traina et al., J. Am. Chem. Soc., 2011, 133 (32), pp 12600-12607, the disclosures of which are herein incorporated by reference in their entirety.

In certain embodiments, methods include performing a flow cytometry experiment with a panel of fluorochromes such as determined with the spectral unmixing matrix calculated as described above. In some instances, methods include irradiating a sample having particles and measuring light with a light detection system as described in detail above. In some instances, the sample analyzed in the flow cytometry experiment is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

In practicing the subject methods according to certain embodiments, an amount of an initial fluidic sample is injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

In some embodiments, methods include counting and optionally sorting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In certain embodiments, methods include irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In embodiments of the method, detectors, such as photomultiplier tubes (PMT), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in certain embodiments also include data acquisition, analysis and recording, such as with a computer, wherein multiple data channels record data from each detector for the light scatter and fluorescence emitted by each particle as it passes through the sample interrogation region of the particle sorting module. In these embodiments, analysis includes classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two-dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

### SYSTEMS

Aspects of the present disclosure also include systems for practicing the subject methods as described above. Systems according to certain embodiments include a processor having memory operably coupled to the processor where the memory includes instructions stored thereon, which when executed by the processor, cause the processor to: receive a calculated spectral unmixing matrix in a computer cache of the system processor, assess a matrix quality parameter of the calculated spectral unmixing matrix, adjust a cached input into the spectral unmixing matrix based on the assessed matrix quality parameter, recalculate the spectral unmixing matrix with the adjusted input and display on a graphical user interface on a display an updated matrix quality parameter of the spectral unmixing matrix in response to the adjusted input.

The subject programmable logic may be implemented in any of a variety of devices such as specifically programmed event processing computers, wireless communication devices, integrated circuit devices, or the like. In some embodiments, the programable logic may be executed by a specifically programmed processor, which may include one or more processors, such as one or more digital signal processors (DSPs), configurable microprocessors, application specific integrated circuits (ASICs), field programmable gate arrays (FPGAs), or other equivalent integrated or discrete logic circuitry. A combination of computing devices, e.g., a combination of a DSP and a microprocessor, a plurality of microprocessors, one or more microprocessors in conjunction with a DSP core, or any other such configuration in at least partial data connectivity may implement one or more of the features described herein.

In certain instances, the system is or includes a particle analyzer. Particle analyzers of interest may include a flow cell for transporting particles in a flow stream, a light source for irradiating the particles in the flow stream at an interrogation point, and a particle-modulated light detector for detecting particle-modulated light. In certain embodiments, the particle analyzer is a flow cytometer. In some cases where the particle analyzer is a flow cytometer, said flow cytometer is a full spectrum flow cytometer.

As discussed herein, a "flow cell" is described in its conventional sense to refer to a component, such as a cuvette, containing a flow channel having a liquid flow stream for transporting particles in a sheath fluid. Cuvettes of interest include containers having a passage running therethrough. The flow stream may include a liquid sample injected from a sample tube. Flow cells of interest include a light-accessible flow channel. In some instances, the flow cell includes transparent material (e.g., quartz) that permits the passage of light therethrough. In some embodiments, the flow cell is a stream-in-air flow cell in which light interrogation of the particles occurs outside of the flow cell (i.e., in free space).

In some cases, the flow stream is configured for irradiation with light from a light source at an interrogation point. The flow stream for which the flow channel is configured may include a liquid sample injected from a sample tube. In certain embodiments, the flow stream may include a narrow, rapidly flowing stream of liquid that is arranged such that linearly segregated particles transported therein are separated from each other in a single-file manner. The "interrogation point" discussed herein refers to a region within the flow cell in which the particle is irradiated by light from the light source, e.g., for analysis. The size of the interrogation point may vary as desired. For example, where 0 µm represents the axis of light emitted by the light source, the interrogation point may range from -100 µm to 100 µm, such as -50 µm to 50 µm, such as -25 µm to 40 µm, and including -15 µm to 30 µm.

After particles are irradiated in the flow cell, particle-modulated light may be observed. By "particle-modulated light" it is meant light that is received from the particles in the flow stream following the irradiation of the particles with light from the light source. In some cases, the particle-modulated light is side-scattered light. As discussed herein, side-scattered light refers to light refracted and reflected from the surfaces and internal structures of the particle. In additional embodiments, the particle-modulated light includes forward-scattered light (i.e., light that travels through or around the particle in mostly a forward direction). In still other cases, the particle-modulated light includes fluorescent light (i.e., light emitted from a fluorochrome following irradiation with excitation wavelength light).

Systems according to certain embodiments include a light source configured to irradiate particles of a sample. In embodiments, the light source may be any suitable broadband or narrow band source of light. Depending on the components in the sample (e.g., cells, beads, non-cellular particles, etc.), the light source may be configured to emit wavelengths of light that vary, ranging from 200 nm to 1500 nm, such as from 250 nm to 1250 nm, such as from 300 nm to 1000 nm, such as from 350 nm to 900 nm and including from 400 nm to 800 nm. For example, the light source may include a broadband light source emitting light having wavelengths from 200 nm to 900 nm. In other instances, the light source includes a narrow band light source emitting a wavelength ranging from 200 nm to 900 nm. For example, the light source may be a narrow band LED (1 nm - 25 nm) emitting light having a wavelength ranging between 200 nm to 900 nm. In certain embodiments, the light source is a laser. In some instances, the subject systems include a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject systems include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject systems include a solid-state laser, such as a ruby laser, an Nd:YAG laser, NdCrYAG laser, Er:YAG laser, Nd:YLF laser, Nd:YVO₄ laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof.

In other embodiments, the light source is a non-laser light source, such as a lamp, including but not limited to a halogen lamp, deuterium arc lamp, xenon arc lamp, a light-emitting diode, such as a broadband LED with continuous spectrum, superluminescent emitting diode, semiconductor light emitting diode, wide spectrum LED white light source, an multi-LED integrated. In some instances, the non-laser light source is a stabilized fiber-coupled broadband light source, white light source, among other light sources or any combination thereof.

The light source may be positioned any suitable distance from the sample (e.g., the flow stream in a flow cytometer), such as at a distance of 0.001 mm or more from the flow stream, such as 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source irradiate the sample at any suitable angle (e.g., relative the vertical axis of the flow stream), such as at an angle ranging from 10° to 90°, such as from 15° to 85°, such as from 20° to 80°, such as from 25° to 75° and including from 30° to 60°, for example at a 90° angle.

The light source may be configured to irradiate the sample continuously or in discrete intervals. In some instances, systems include a light source that is configured to irradiate the sample continuously, such as with a continuous wave laser that continuously irradiates the flow stream at the interrogation point in a flow cytometer. In other instances, systems of interest include a light source that is configured to irradiate the sample at discrete intervals, such as every 0.001 milliseconds, every 0.01 milliseconds, every 0.1 milliseconds, every 1 millisecond, every 10 milliseconds, every 100 milliseconds and including every 1000 milliseconds, or some other interval. Where the light source is configured to irradiate the sample at discrete intervals, systems may include one or more additional components to provide for intermittent irradiation of the sample with the light source. For example, the subject systems in these embodiments may include one or more laser beam choppers, manually or computer controlled beam stops for blocking and exposing the sample to the light source.

In some embodiments, the light source is a laser. Lasers of interest may include pulsed lasers or continuous wave lasers. For example, the laser may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO₄ laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof; a semiconductor diode laser, optically pumped semiconductor laser (OPSL), or a frequency doubled- or frequency tripled implementation of any of the above mentioned lasers.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example lasers in light beam generators of interest may be a gas laser, such as a helium-neon laser, argon laser, krypton laser, xenon laser, nitrogen laser, CO2 laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO4 laser, Nd:yCa4O(BO3)3 laser, Nd:YCOB laser, titanium sapphire laser, thulim YAG laser, ytterbium YAG laser, ytterbium2O3 laser or cerium doped lasers and combinations thereof.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, they may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, light beam generators configured to generate two or more beams of frequency shifted light include laser excitation modules as described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference.

In embodiments, systems include a light detection system having a photodetector configured to detect light emitted by the irradiated particles. In some embodiments, the light detection system is configured to detect scattered light. In some instances, the light detection system includes a side-scattered light detector. In some instances, the light detection system includes a forward-scattered light detector. In other embodiments, the light detection system includes multiple scattered light detectors, such as 2 or more, such as 3 or more, such as 4 or more, and including 5 or more. In some embodiments, the subject light detection system also includes a fluorescent light detector configured to detect one or more fluorescent wavelengths of light. In other embodiments, the light detection system includes multiple fluorescent light detectors such as 2 or more, such as 3 or more, such as 4 or more, 5 or more, 10 or more, 15 or more, and including 20 or more.

Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

Where the subject systems include multiple fluorescent light detectors, each fluorescent light detector may be the same, or the collection of fluorescent light detectors may be a combination of different types of detectors. For example, where the subject systems include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, flow cytometers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

In certain embodiments, the light detection systems described herein are part of a flow cytometer. Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

In some embodiments, the flow cytometer includes a flow cell. Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. In some embodiments, cuvettes are formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -50 µm to 50 µm, such as -25 µm to 40 µm, and including -15 µm to 30 µm. Depending on certain considerations (e.g., the number and arrangement of lasers), multiple irradiation points may exist within the flow cells.

In some embodiments, the flow cell includes, or is configured for use with, a sample injection port configured to provide a sample to the flow cell. In embodiments, the sample injection system is configured to provide suitable flow of sample to the flow cell inner chamber (i.e., flow channel). Depending on the desired characteristics of the flow stream, the rate of sample conveyed to the flow cell chamber by the sample injection port may be1 µL/min or more, such as 2 µL/min or more, such as 3 µL/min or more, such as 5 µL/min or more, such as 10 µL/min or more, such as 15 µL/min or more, such as 25 µL/min or more, such as 50 µL/min or more and including 100 µL/min or more, where in some instances the rate of sample conveyed to the flow cell chamber by the sample injection port is 1µL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more and including 100 µL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

In some embodiments, the flow cell also includes a sheath fluid injection port configured to provide a sheath fluid to the flow cell. In embodiments, the sheath fluid injection system is configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

In some embodiments, the sheath fluid injection port is an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In some embodiments, systems include or are operationally coupled to a flow cytometer. Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter, BD Biosciences FACSDiscover^{™} cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference.

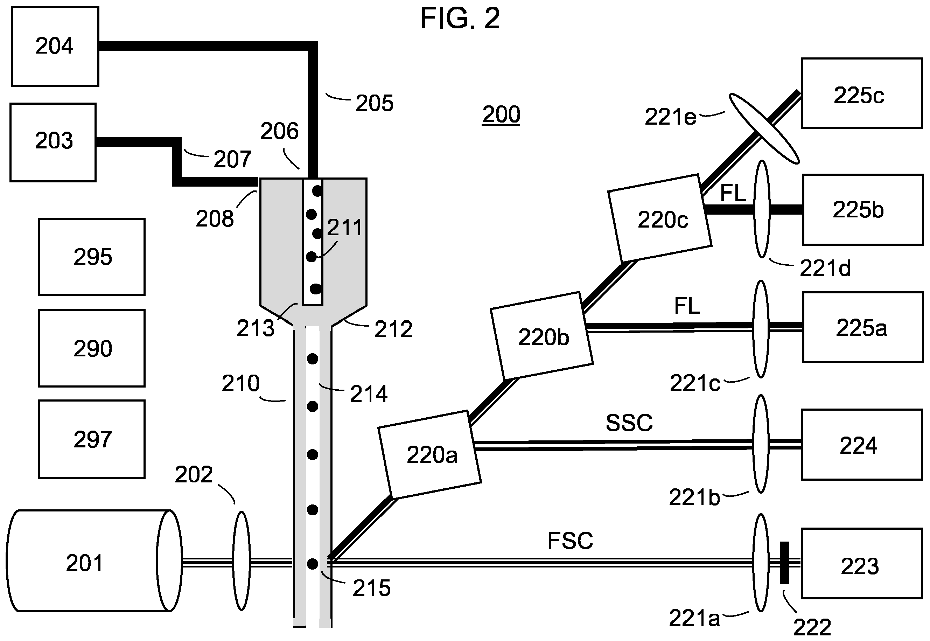

**FIG. 2** shows a system 200 for flow cytometry in accordance with an illustrative embodiment of the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2****,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in **FIG. 2****,** but can include any flow cytometer known in the art. For example, a flow cytometer may have any number of lasers, beam splitters, filters, and detectors at various wavelengths and in various different configurations. For example, while the embodiment of **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S. Patent Publication No. 2020/0256781, filed on December 23, 2019, the disclosure of which is incorporated herein by reference. In some embodiments, systems for sorting components of a sample include a particle sorting module having deflection plates, such as described in U.S. Patent Publication No. 2017/0299493, filed on March 28, 2017, the disclosure of which is incorporated herein by reference.

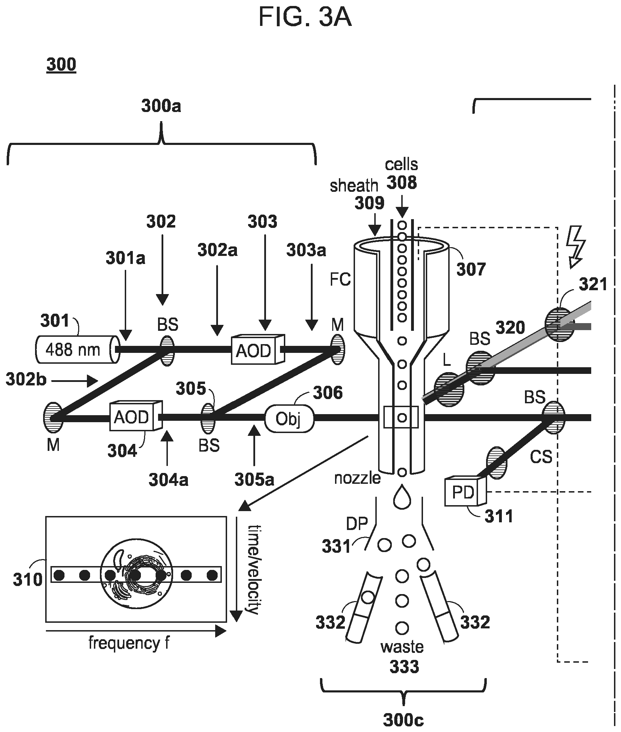

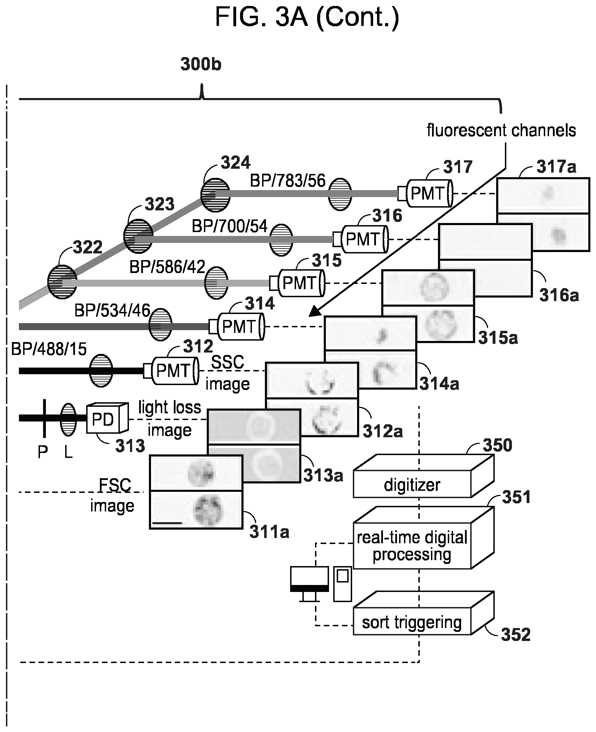

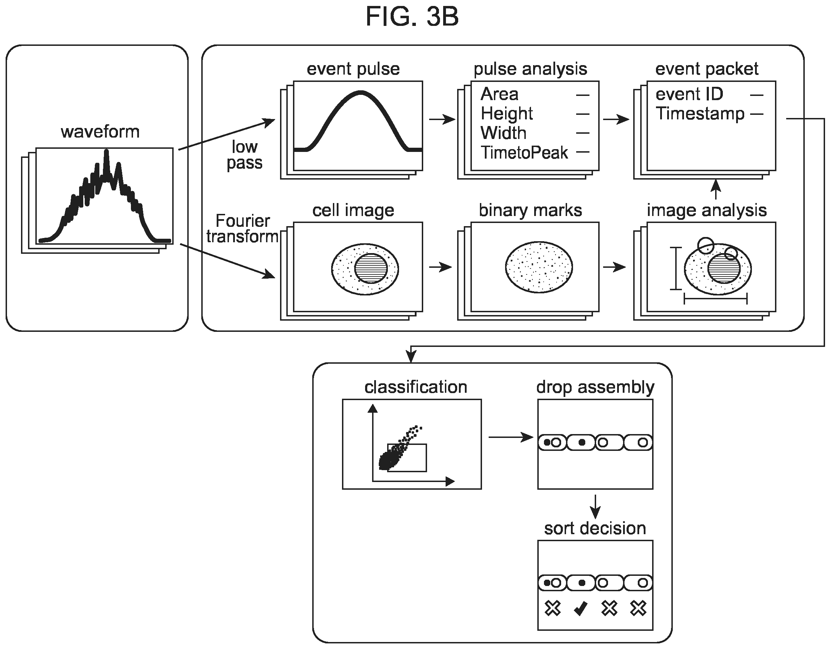

In certain embodiments, systems are a fluorescence imaging using radiofrequency tagged emission image-enabled particle sorter, such as depicted in **FIG. 3****.** Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943, the disclosure of which is herein incorporated by reference.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017, the disclosure of which is incorporated herein by reference. In certain embodiments, sorting component 300c includes a sort decision module having a plurality of sort decision units, such as those described in U.S. Patent Publication No. 2020/0256781, the disclosure of which is incorporated herein by reference.

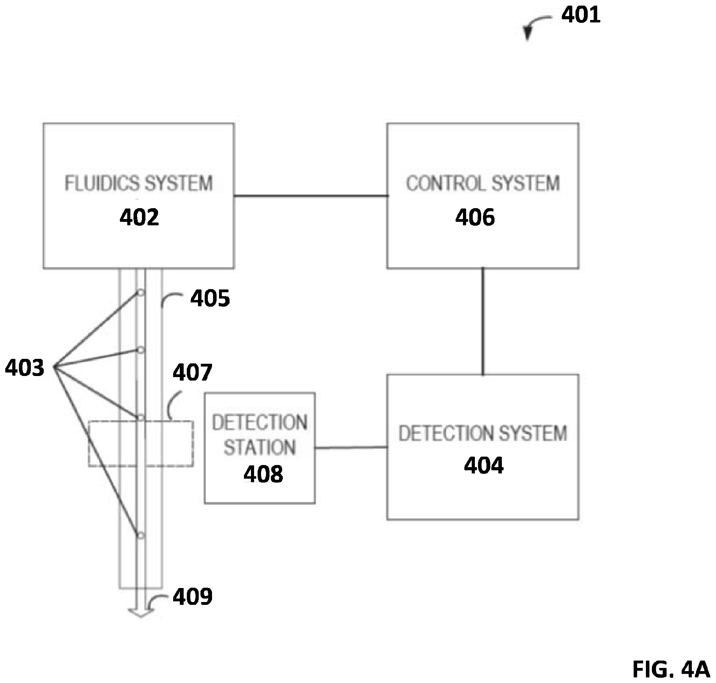

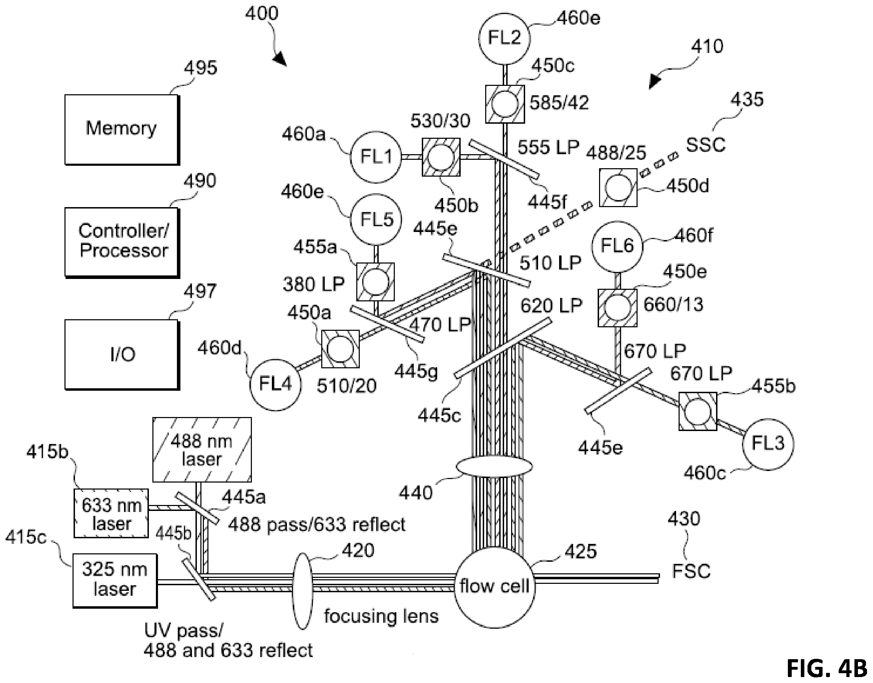

In some embodiments, systems are particle analyzers where the particle analysis system 401 **(****FIG. 4****)** can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4****,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

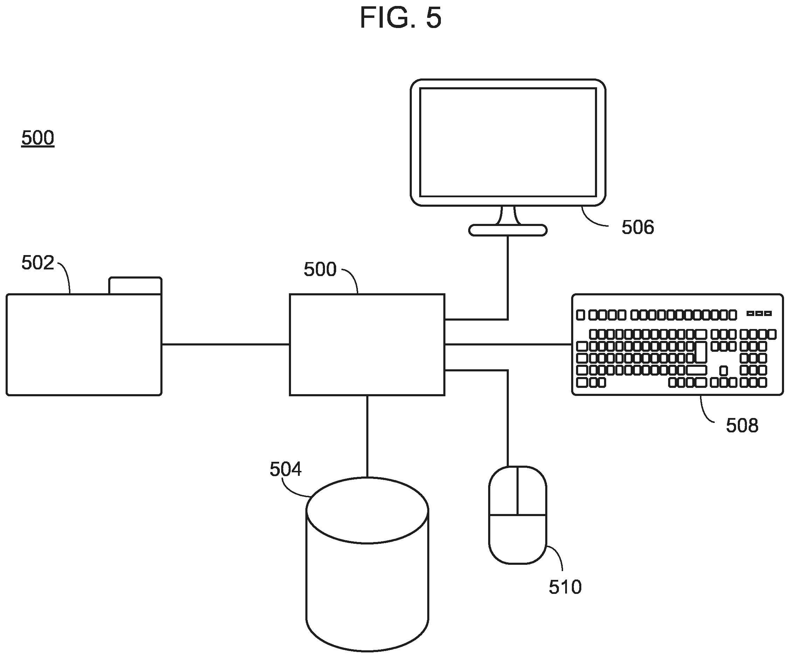

**FIG. 5** shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel. Analytics controller 500 may be a processor configured to carry out methods of the invention, e.g., by applying a distance-based classification model to determine a density distinguishing threshold in a size-based analyte feature space, applying a density-based clustering algorithm to separate the analyte data into a high-density cluster and a low-density cluster based on the density threshold and classifying the analyte data based on the high-density cluster and the low density cluster based on the size-based analyte feature space.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in **FIG. 5****,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

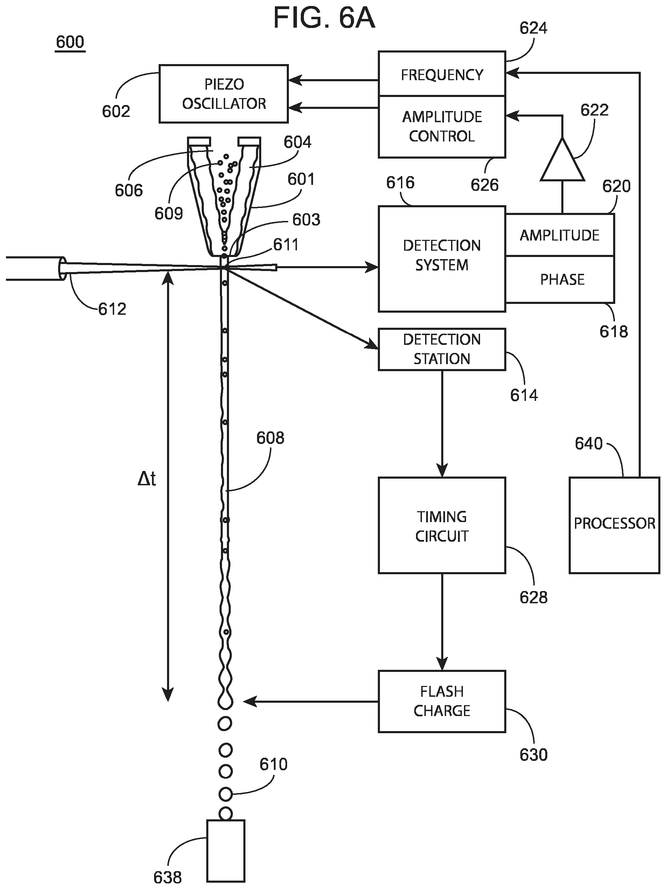

**FIG. 6A** is a schematic drawing of a particle sorter system 600 (e.g., the particle analyzer or sorting system 502) in accordance with one embodiment presented herein. In some embodiments, the particle sorter system 600 is a cell sorter system. As shown in **FIG. 6A****,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A****,** the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039, which is incorporated herein by reference in its entirety. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

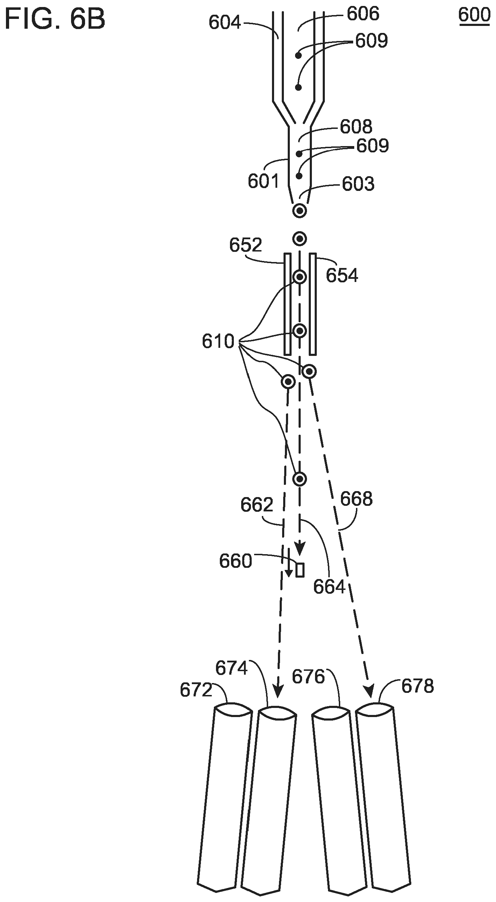

**FIG. 6B** is a schematic drawing of a particle sorter system, in accordance with one embodiment presented herein. The particle sorter system 600 shown in **FIG. 6B****,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in **FIG. 6B****,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in **FIG. 6B** include the BD FACSAria^{™} line of flow cytometers commercially provided by Becton, Dickinson and Company (Franklin Lakes, NJ).

### COMPUTER-CONTROLLED SYSTEMS

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

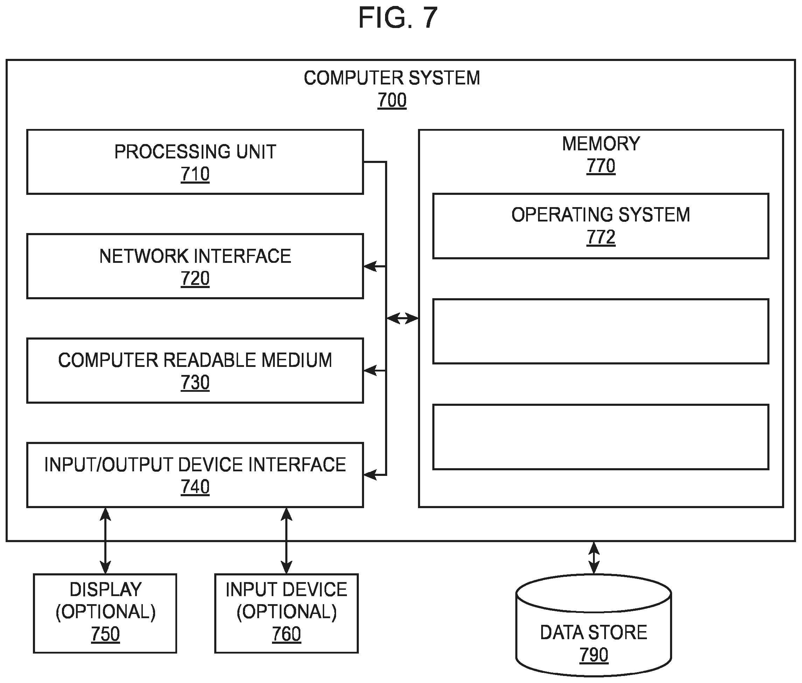

**FIG. 7** depicts a general architecture of an example computing device 700 according to certain embodiments. The general architecture of the computing device 700 depicted in **FIG. 7** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo^{®}) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components in some embodiments) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

### NON-TRANSITORY COMPUTER-READABLE STORAGE MEDIA

Aspects of the present disclosure further include non-transitory computer readable storage media having instructions for practicing the subject methods, such as to practice one or more computer implemented methods described herein. Computer readable storage media may be employed on one or more computers for complete automation or partial automation of a system for practicing methods described herein. In certain embodiments, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Python, Java, Java Script, C, C#, C++, Go, R, Swift, PHP, as well as many others.

In some embodiments, the non-transitory computer readable storage medium includes algorithm for receiving a calculated spectral unmixing matrix in a computer cache, algorithm for assessing a matrix quality parameter of the calculated spectral unmixing matrix, algorithm for adjusting a cached input into the spectral unmixing matrix based on the assessed matrix quality parameter, algorithm for recalculating the spectral unmixing matrix with the adjusted input and algorithm for displaying on a graphical user interface on a display an updated matrix quality parameter of the spectral unmixing matrix in response to the adjusted input.

In some embodiments, the non-transitory computer readable storage medium includes algorithm for assessing a matrix quality parameter of the calculated spectral unmixing matrix selected from the group consisting of complexity index, similarity index, a hotspot matrix, condition index, matrix of variance decomposition proportions (VDPs), spread correlation matrix, collinearity, variance inflation factor and covariance matrix. In some instances, the memory includes instructions for assessing a similarity index of the calculated spectral unmixing matrix. In some instances, the non-transitory computer readable storage medium includes algorithm for assessing a complexity index of the calculated spectral unmixing matrix. In some instances, the non-transitory computer readable storage medium includes algorithm for assessing a hotspot matrix of the calculated spectral unmixing matrix. In some instances, the non-transitory computer readable storage medium includes algorithm for assessing the matrix quality parameters by visualizing data plots of the calculated spectral unmixing matrix.

In some embodiments, the non-transitory computer readable storage medium includes algorithm for adjusting a cached input of the spectral unmixing matrix in the computer cache based on the assessed matrix quality parameters. In some instances, the non-transitory computer readable storage medium includes algorithm for determining whether the cache includes results for one or more control data used in calculating the spectral unmixing matrix. Where no results are cached for a control, the non-transitory computer readable storage medium includes algorithm for computing statistics and results for the control data. In some instances, the input includes single stain positive control data. In certain instances, the single stain positive control data is generated from single stain control beads. In certain instances, the single stain positive control data is generated from single stain control cells. In some instances, the input includes autofluorescence control data. In some instances, the input includes unstained control data. In some instances, the input includes negative control data. In some instances, the input is raw control data. In some instances, the input includes control data computations. In some instances, the input includes control data statistics (e.g., generated from computations of the control data). In some instances, the input includes calculated gate statistics. In certain embodiments, the non-transitory computer readable storage medium includes algorithm for adjusting inputs with the graphical user interface.

In some embodiments, the non-transitory computer readable storage medium includes algorithm for storing input control data in the computer cache and generating one or more of input control data computations and input control data statistics from the stored input control data. In some instances, the non-transitory computer readable storage medium includes algorithm for clearing the stored input control data from the computer cache when an adjustment is made to the input control data. In some instances, the non-transitory computer readable storage medium includes algorithm for determining whether an input control data is stored in the computer cache. In some instances, control data computations and control data statistics are generated when the input control data is determined to be not present in the computer cache and the generated control data computations and control data statistics are stored in the computer cache. In some instances, the non-transitory computer readable storage medium includes algorithm for determining that the input control data comprises an uncached negative control, generating data computations and data statistics for the uncached negative control; and caching the data computations and data statistics for the uncached negative control. In some instances, the non-transitory computer readable storage medium includes algorithm for determining that the input control data comprises a cached negative control, retrieving data computations and data statistics for the cached negative control; and recalculating data computations and data statistics for the cached negative control. In some instances, the non-transitory computer readable storage medium includes algorithm for determining that the input control data comprises an uncached negative control, retrieving input control data comprising a cached negative control; and generating data computations and data statistics for the uncached negative control and the cached negative control. In certain instances, the non-transitory computer readable storage medium includes algorithm for recalculating the spectral unmixing matrix with the updated input control data that is stored in the cache.

In some instances, the non-transitory computer readable storage medium includes algorithm for making small adjustments to the inputs of the calculated spectral unmixing matrix. In some instances, the non-transitory computer readable storage medium includes algorithm for recalculating the spectral unmixing matrix when the adjusted input includes a change in the input that is equal to or below a predetermined threshold. In some instances, the non-transitory computer readable storage medium includes algorithm for recalculating the spectral unmixing matrix when the adjusted input includes a change in the input that is above a predetermined threshold. In some instances, the non-transitory computer readable storage medium includes algorithm for retrieving a computed input from the computer cache before adjusting the input. In some instances, the non-transitory computer readable storage medium includes algorithm for clearing a cached input before adjusting the input. In some instances, the non-transitory computer readable storage medium includes algorithm for clearing a cached input and applying a new input into the spectral unmixing matrix. In some instances, the non-transitory computer readable storage medium includes algorithm for adjusting a cached input by excluding certain control data when recalculating the spectral unmixing matrix. In some instances, the non-transitory computer readable storage medium includes algorithm for adjusting a cached input by applying new control data when recalculating the spectral unmixing matrix. In some instances, the non-transitory computer readable storage medium includes algorithm for adjusting a cached input by changing an autofluorescence gate of autofluorescence control data when recalculating the spectral unmixing matrix.

In some instances, the non-transitory computer readable storage medium includes algorithm for displaying a plurality of different matrix quality parameters on the graphical user interface. In some instances, the non-transitory computer readable storage medium includes algorithm for displaying the updated matrix quality parameter of the spectral unmixing matrix on the graphical user interface in near real-time in response to the adjusted input. In other instances, the non-transitory computer readable storage medium includes algorithm for displaying the updated matrix quality parameter of the spectral unmixing matrix on the graphical user interface in real time in response to the adjusted input.

The non-transitory computer readable storage medium may be employed on one or more computer systems having a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as those mentioned above, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques.

### KITS

Aspects of the present disclosure further include kits, where kits include storage media such as a magneto-optical disk, CD-ROM, CD-R, magnetic tape, non-volatile memory card, ROM, DVD-ROM, Blue-ray disk, solid state disk, and network attached storage (NAS). Any of these program storage media, or others now in use or that may later be developed, may be included in the subject kits. In embodiments, the program storage media include instructions for assessing matrix quality parameters of a spectral unmixing matrix as in the methods and for use with the systems described herein. In embodiments, the instructions contained on computer readable media provided in the subject kits, or a portion thereof, can be implemented as software components of a software for analyzing data. In these embodiments, computer-controlled systems according to the instant disclosure may function as a software "plugin" for an existing software package (e.g., FlowJo^{®}).

In addition to the above components, the subject kits may further include (in some embodiments) instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject methods, systems and computer systems find use in a variety of applications where it is desirable to optimize a light detection system (e.g., having a photodetector), such as in a particle analyzer. The subject methods and systems also find use for light detection systems that are used to analyze and sort particle components in a sample in a fluid medium, such as a biological sample. The present disclosure also finds use in flow cytometry where it is desirable to provide a flow cytometer with improved cell sorting accuracy, enhanced particle collection, reduced energy consumption, particle charging efficiency, more accurate particle charging and enhanced particle deflection during cell sorting. In embodiments, the present disclosure reduces the need for user input or manual adjustment during sample analysis with a flow cytometer. In certain embodiments, the subject methods and systems provide fully automated protocols so that adjustments to a flow cytometer during use require little, if any human input.

Notwithstanding the appended claims, the disclosure is also defined by the following clauses:
1.A computer implemented method comprising:
   receiving a calculated spectral unmixing matrix in a computer cache;
   assessing a matrix quality parameter of the calculated spectral unmixing matrix;
   adjusting a cached input into the spectral unmixing matrix based on the assessed matrix quality parameter;
   recalculating the spectral unmixing matrix with the adjusted input; and
   displaying on a graphical user interface on a display an updated matrix quality parameter of the spectral unmixing matrix in response to the adjusted input.
2. The method according to clause 1, wherein the method comprises assessing a matrix quality parameter of the calculated spectral unmixing matrix selected from the group consisting of complexity index, similarity index, a hotspot matrix, condition index, matrix of variance decomposition proportions (VDPs), spread correlation matrix, collinearity, variance inflation factor and covariance matrix.
3. The method according to clause 2, wherein the method comprises assessing the similarity index of the calculated spectral unmixing matrix.
4. The method according to clause 2, wherein the method comprises assessing the complexity index of the calculated spectral unmixing matrix.
5. The method according to clause 2, wherein the method comprises assessing a hotspot matrix of the calculated spectral unmixing matrix.
6. The method according to any one of clauses 1-5, wherein assessing the matrix quality parameters comprises visualizing data plots of the calculated spectral unmixing matrix.
7. The method according to any one of clauses 1-6, wherein the input comprises single stain positive control data.
8. The method according to clause 7, wherein the single stain positive control data is generated from single stain control beads.
9. The method according to clause 7, wherein the single stain positive control data is generated from single stain control cells.
10. The method according to any one of clauses 1-9, wherein the input comprises an autofluorescence control data.
11. The method according to any one of clauses 1-10, wherein the input comprises unstained control data.
12. The method according to any one of clauses 1-11, wherein the input comprises negative control data.
13. The method according to any one of clauses 1-12, wherein the input comprises raw control data.
14. The method according to any one of clauses 1-13, wherein the input comprises control data computations.
15. The method according to any one of clauses 1-14, wherein the input comprises control data statistics.
16. The method according to any one of clauses 1-15, wherein the input comprises calculated gate statistics.
17. The method according to any one of clauses 1-16, wherein the input is adjusted with the graphical user interface.
18. The method according to any one of clauses 1-17, wherein the method comprises:
   storing input control data in the computer cache; and
   generating one or more of input control data computations and input control data statistics from the stored input control data.
19. The method according to clause 18, wherein the method further comprises clearing the stored input control data from the computer cache when an adjustment is made to the input control data.
20. The method according to any one of clauses 18-19, wherein the method comprises determining whether an input control data is stored in the computer cache.
21. The method according to clause 20, wherein the method comprises:
   generating one or more of control data computations and control data statistics when the input control data is determined to be not present in the computer cache;
   storing the generated control data computations and control data statistics in the computer cache.
22. The method according to any one of clauses 18-21, wherein the method comprises:
   determining that the input control data comprises an uncached negative control;
   generating data computations and data statistics for the uncached negative control; and
   caching the data computations and data statistics for the uncached negative control.
23. The method according to any one of clauses 18-22, wherein the method comprises:
   determining that the input control data comprises a cached negative control;
   retrieving data computations and data statistics for the cached negative control; and
   recalculating data computations and data statistics for the cached negative control.
24. The method according to any one of clauses 18-21, wherein the method comprises:
   determining that the input control data comprises an uncached negative control;
   retrieving input control data comprising a cached negative control; and
   generating data computations and data statistics for the uncached negative control and the cached negative control.
25. The method according to any one of clauses 18-24, wherein the method further comprises recalculating the spectral unmixing matrix with the updated input control data that is stored in the computer cache.
26. The method according to any one of clauses 1-25, wherein the spectral unmixing matrix is recalculated when the adjusted input comprises a change in the input that is equal to or below a predetermined threshold.
27. The method according to clauses 1-25, wherein the spectral unmixing matrix is recalculated when the adjusted input comprises a change in the input that is above a predetermined threshold.
28. The method according to any one of clauses 1-27, wherein the method comprises retrieving a computed input from the computer cache before adjusting the input.
29. The method according to any one of clauses 1-28, wherein the method further comprises clearing the cached input when the input is adjusted.
30. The method according to any one of clauses 1-28, wherein the method further comprises clearing the cached input and applying a new input into the spectral unmixing matrix.
31. The method according to any one of clauses 1-30, wherein adjusting the cached input comprises excluding one or more controls when recalculating the spectral unmixing matrix.
32. The method according to any one of clauses 1-31, wherein adjusting the cached input comprises applying new control data when recalculating the spectral unmixing matrix.
33. The method according to any one of clauses 1-32, wherein adjusting the cached input comprises changing an autofluorescence gate of the autofluorescence control data when recalculating the spectral unmixing matrix.
34. The method according to any one of clauses 1-33, wherein the method comprises displaying a plurality of different matrix quality parameters on the graphical user interface.
35. The method according any one of clauses 1-34, wherein the updated matrix quality parameter of the spectral unmixing matrix is displayed in real time in response to the adjusted input.
36. A system for adjusting a parameter of a spectral unmixing matrix, the system comprising a processor comprising memory operably coupled to the processor wherein the memory comprises instructions stored thereon, which when executed by the processor, cause the processor to:
   receive a calculated spectral unmixing matrix in a computer cache of the system processor;
   assess a matrix quality parameter of the calculated spectral unmixing matrix;
   adjust a cached input into the spectral unmixing matrix based on the assessed matrix quality parameter;
   recalculate the spectral unmixing matrix with the adjusted input; and
   display on a graphical user interface on a display an updated matrix quality parameter of the spectral unmixing matrix in response to the adjusted input.
37. The system according to clause 36, wherein the memory comprises instructions for assessing a matrix quality parameter of the calculated spectral unmixing matrix selected from the group consisting of complexity index, similarity index, a hotspot matrix, condition index, matrix of variance decomposition proportions (VDPs), spread correlation matrix, collinearity, variance inflation factor and covariance matrix.
38. The system according to clause 37, wherein the memory comprises instructions for assessing the similarity index of the calculated spectral unmixing matrix.
39. The system according to clause 37, wherein the memory comprises instructions for assessing the complexity index of the calculated spectral unmixing matrix.
40. The system according to clause 37, wherein the memory comprises instructions for assessing a hotspot matrix of the calculated spectral unmixing matrix.
41. The system according to any one of clauses 36-40, wherein the memory comprises instructions for assessing the matrix quality parameters by visualizing data plots of the calculated spectral unmixing matrix.
42. The system according to clause 36-41, wherein the input comprises single stain positive control data.
43. The system according to clause 42, wherein the single stain positive control data is generated from single stain control beads.
44. The system according to clause 42, wherein the single stain positive control data is generated from single stain control cells.
45. The system according to any one of clauses 36-44, wherein the input comprises an autofluorescence control data.
46. The system according to any one of clauses 36-45, wherein the input comprises unstained control data.
47. The system according to any one of clauses 36-46, wherein the input comprises negative control data.
48. The system according to any one of clauses 36-47, wherein the input comprises raw control data.
49. The system according to any one of clauses 36-48, wherein the input comprises control data computations.
50. The system according to any one of clauses 36-49, wherein the input comprises control data statistics.
51. The system according to any one of clauses 36-50, wherein the input comprises calculated gate statistics.
52. The system according to any one of clauses 36-51, wherein the memory comprises instructions to adjust the input with the graphical user interface.
53. The system according to any one of clauses 28-52, wherein the memory comprises instructions to:
   store input control data in the computer cache;
   generate one or more of input control data computations and input control data statistics from the stored input control data.
54. The system according to clause 53, wherein the memory further comprises instructions to clear the stored input control data from the computer cache when an adjustment is made to the input control data.
55. The system according to any one of clauses 53-54, wherein the memory comprises instructions to determine whether an input control data is stored in the computer cache.
56. The system according to clause 55, wherein the memory comprises instructions to:
   generate one or more of control data computations and control data statistics when the input control data is determined to be not present in the computer cache; and
   store the generated control data computations and control data statistics in the computer cache.
57. The system according to any one of clauses 53-56, wherein the memory comprises instructions to:
   determine that the input control data comprises an uncached negative control;
   generate data computations and data statistics for the uncached negative control; and
   cache the data computations and data statistics for the uncached negative control.
58. The system according to any one of clauses 53-57, wherein the memory comprises instructions to:
   determine that the input control data comprises a cached negative control;
   retrieve data computations and data statistics for the cached negative control; and
   recalculate data computations and data statistics for the cached negative control.
59. The system according to any one of clauses 53-58, wherein the memory comprises instructions to:
   determine that the input control data comprises an uncached negative control;
   retrieve input control data comprising a cached negative control; and
   generate data computations and data statistics for the uncached negative control and the cached negative control.
60. The system according to any one of clauses 53-59, wherein the memory further comprises instructions to recalculate the spectral unmixing matrix with the updated input control data that is stored in the computer cache.
61. The system according to any one of clauses 36-60, wherein the memory comprises instructions to recalculate the spectral unmixing matrix when the adjusted input comprises a change in the input that is equal to or below a predetermined threshold.
62. The system according to any one of clauses 36-60, wherein the memory comprises instructions to recalculate the spectral unmixing matrix when the adjusted input comprises a change in the input that is above a predetermined threshold.
63. The system according to any one of clauses 36-62, wherein the memory comprises instructions to retrieve a computed input from the computer cache before adjusting the input.
64. The system according to any one of clauses 36-63, wherein the memory comprises instructions to clear the cached input when the input is adjusted.
65. The system according to any one of clauses 36-64, wherein the memory comprises instructions to clear the cached input and applying a new input into the spectral unmixing matrix.
66. The system according to any one of clauses 36-65, wherein the memory comprises instructions to exclude one or more controls when recalculating the spectral unmixing matrix.
67. The system according to any one of clauses 36-66, wherein the memory comprises instructions to adjust the cached input by applying new control data when recalculating the spectral unmixing matrix.
68. The system according to any one of clauses 36-67, wherein the memory comprises instructions to adjust the cached input by changing an autofluorescence gate of the autofluorescence control data when recalculating the spectral unmixing matrix.
69. The system according to any one of clauses 36-68, wherein the memory comprises instructions to display a plurality of different matrix quality parameters on the graphical user interface.
70. The system according to any one of clauses 36-69, wherein the memory comprises instructions to display the updated matrix quality parameter of the spectral unmixing matrix in real time in response to the adjusted input.
71. The system according to any one of clauses 36-70, wherein the system comprises a flow cytometer.
72. A non-transitory computer readable storage medium comprising instructions stored thereon, the instructions comprising algorithm to adjust a parameter of a spectral unmixing matrix, comprising:
   algorithm for receiving a calculated spectral unmixing matrix in a computer cache;
   algorithm for assessing a matrix quality parameter of the calculated spectral unmixing matrix;
   algorithm for adjusting a cached input into the spectral unmixing matrix based on the assessed matrix quality parameter;
   algorithm for recalculating the spectral unmixing matrix with the adjusted input; and
   algorithm for displaying on a graphical user interface on a display an updated matrix quality parameter of the spectral unmixing matrix in response to the adjusted input.
73. The non-transitory computer readable storage medium according to clause 72, wherein the non-transitory computer readable storage medium comprises algorithm for assessing a matrix quality parameter of the calculated spectral unmixing matrix selected from the group consisting of complexity index, similarity index, a hotspot matrix, condition index, matrix of variance decomposition proportions (VDPs), spread correlation matrix, collinearity, variance inflation factor and covariance matrix.
74. The non-transitory computer readable storage medium according to clause 73, wherein the non-transitory computer readable storage medium comprises algorithm for assessing the similarity index of the calculated spectral unmixing matrix.
75. The non-transitory computer readable storage medium according to clause 73, wherein the non-transitory computer readable storage medium comprises algorithm for assessing the complexity index of the calculated spectral unmixing matrix.
76. The non-transitory computer readable storage medium according to clause 73, wherein the non-transitory computer readable storage medium comprises algorithm for assessing a hotspot matrix of the calculated spectral unmixing matrix.
77. The non-transitory computer readable storage medium according to any one of clauses 72-76, wherein the non-transitory computer readable storage medium comprises algorithm for assessing the matrix quality parameters by visualizing data plots of the calculated spectral unmixing matrix.
78. The non-transitory computer readable storage medium according to clause 72-77, wherein the input comprises single stain positive control data.
79. The non-transitory computer readable storage medium according to clause 78, wherein the single stain positive control data is generated from single stain control beads.
80. The non-transitory computer readable storage medium according to clause 78, wherein the single stain positive control data is generated from single stain control cells.
81. The non-transitory computer readable storage medium according to any one of clauses 72-80, wherein the input comprises an autofluorescence control data.
82. The non-transitory computer readable storage medium according to any one of clauses 72-81, wherein the input comprises unstained control data.
83. The non-transitory computer readable storage medium according to any one of clauses 72-82, wherein the input comprises negative control data.
84. The non-transitory computer readable storage medium according to any one of clauses 72-83, wherein the input comprises raw control data.
85. The non-transitory computer readable storage medium according to any one of clauses 72-84, wherein the input comprises control data computations.
86. The non-transitory computer readable storage medium according to any one of clauses 72-85, wherein the input comprises control data statistics.
87. The non-transitory computer readable storage medium according to any one of clauses 72-86, wherein the input comprises calculated gate statistics.
88. The non-transitory computer readable storage medium according to any one of clauses 72-87, wherein the non-transitory computer readable storage medium comprises algorithm to adjust the input with the graphical user interface.
89. The non-transitory computer readable storage medium according to any one of clauses 72-88, wherein the non-transitory computer readable storage medium comprises:
   algorithm for storing input control data in the computer cache;
   algorithm for generating one or more of input control data computations and input control data statistics from the stored input control data.
90. The non-transitory computer readable storage medium according to clause 89, wherein the non-transitory computer readable storage medium comprises algorithm for clearing the stored input control data from the computer cache when an adjustment is made to the input control data.
91. The non-transitory computer readable storage medium according to any one of clauses 89-90, wherein the non-transitory computer readable storage medium comprises algorithm for determining whether an input control data is stored in the computer cache.
92. The non-transitory computer readable storage medium according to clause 91, wherein the non-transitory computer readable storage medium comprises:
   algorithm for generating one or more of control data computations and control data statistics when the input control data is determined to be not present in the computer cache; and
   algorithm for storing the generated control data computations and control data statistics in the computer cache.
93. The non-transitory computer readable storage medium according to any one of clauses 89-92, wherein the non-transitory computer readable storage medium comprises:
   algorithm for determining that the input control data comprises an uncached negative control;
   algorithm for generating data computations and data statistics for the uncached negative control; and
   algorithm for caching the data computations and data statistics for the uncached negative control.
94. The non-transitory computer readable storage medium according to any one of clauses 89-93, wherein the non-transitory computer readable storage medium comprises:
   algorithm for determining that the input control data comprises a cached negative control;
   algorithm for retrieving data computations and data statistics for the cached negative control; and
   algorithm for recalculating data computations and data statistics for the cached negative control.
95. The non-transitory computer readable storage medium according to any one of clauses 89-94, wherein the non-transitory computer readable storage medium comprises:
   algorithm for determining that the input control data comprises an uncached negative control;
   algorithm for retrieving input control data comprising a cached negative control; and
   algorithm for generating data computations and data statistics for the uncached negative control and the cached negative control.
96. The non-transitory computer readable storage medium according to any one of clauses 89-95, wherein the non-transitory computer readable storage medium comprises algorithm for recalculating the spectral unmixing matrix with the updated input control data that is stored in the computer cache.
97. The non-transitory computer readable storage medium according to any one of clauses 72-96, wherein the non-transitory computer readable storage medium comprises algorithm to recalculate the spectral unmixing matrix when the adjusted input comprises a change in the input that is equal to or below a predetermined threshold.
98. The non-transitory computer readable storage medium according to any one of clauses 72-97, wherein the non-transitory computer readable storage medium comprises algorithm to recalculate the spectral unmixing matrix when the adjusted input comprises a change in the input that is above a predetermined threshold.
99. The non-transitory computer readable storage medium according to any one of clauses 72-98, wherein the non-transitory computer readable storage medium comprises algorithm to retrieve a computed input from the computer cache before adjusting the input.
100. The non-transitory computer readable storage medium according to any one of clauses 72-99, wherein the non-transitory computer readable storage medium comprises algorithm to clear the cached input when the input is adjusted.
101. The non-transitory computer readable storage medium according to any one of clauses 72-100, wherein the non-transitory computer readable storage medium comprises algorithm to clear the cached input and applying a new input into the spectral unmixing matrix.
102. The non-transitory computer readable storage medium according to any one of clauses 72-101, wherein the non-transitory computer readable storage medium comprises algorithm to exclude one or more controls when recalculating the spectral unmixing matrix.
103. The non-transitory computer readable storage medium according to any one of clauses 72-102, wherein the non-transitory computer readable storage medium comprises algorithm to adjust the cached input by applying new control data when recalculating the spectral unmixing matrix.
104. The non-transitory computer readable storage medium according to any one of clauses 72-103, wherein the non-transitory computer readable storage medium comprises algorithm to adjust the cached input by changing an autofluorescence gate of the autofluorescence control data when recalculating the spectral unmixing matrix.
105. The non-transitory computer readable storage medium according to any one of clauses 72-104, wherein the non-transitory computer readable storage medium comprises algorithm to display a plurality of different matrix quality parameters on the graphical user interface.
106. The non-transitory computer readable storage medium according to any one of clauses 72-105, wherein the non-transitory computer readable storage medium comprises algorithm to display the updated matrix quality parameter of the spectral unmixing matrix in real time in response to the adjusted input.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the spirit or scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the disclosure to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope and spirit of present disclosure is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

## Claims

1. A system for adjusting a parameter of a spectral unmixing matrix, the system comprising a processor comprising memory operably coupled to the processor wherein the memory comprises instructions stored thereon, which when executed by the processor, cause the processor to:
receive a calculated spectral unmixing matrix in a computer cache of the system processor;
assess a matrix quality parameter of the calculated spectral unmixing matrix;
adjust a cached input into the spectral unmixing matrix based on the assessed matrix quality parameter;
recalculate the spectral unmixing matrix with the adjusted input; and
display on a graphical user interface on a display an updated matrix quality parameter of the spectral unmixing matrix in response to the adjusted input.

2. The system according to claim 1, wherein the memory comprises instructions for assessing a matrix quality parameter of the calculated spectral unmixing matrix selected from the group consisting of complexity index, similarity index, a hotspot matrix, condition index, matrix of variance decomposition proportions (VDPs), spread correlation matrix, collinearity, variance inflation factor and covariance matrix.

3. The system according to any one of claims 1 or 2, wherein the memory comprises instructions for assessing:
the similarity index of the calculated spectral unmixing matrix;
the complexity index of the calculated spectral unmixing matrix; or
a hotspot matrix of the calculated spectral unmixing matrix.

4. The system according to any one of claims 1-3, wherein the memory comprises instructions for assessing the matrix quality parameters by visualizing data plots of the calculated spectral unmixing matrix.

5. The system according to any one of claims 1-4, wherein the input comprises one or more of: single stain positive control data;
an autofluorescence control data;
unstained control data;
negative control data;
raw control data;
control data computations;
control data statistics; and
calculated gate statistics.

6. The system according to any one of claims 1-5, wherein the memory comprises instructions to adjust the input with the graphical user interface.

7. The system according to any one of claims 1-6, wherein the memory comprises instructions to:
store input control data in the computer cache;
generate one or more of input control data computations and input control data statistics from the stored input control data.

8. The system according to any one of claims 1-7, wherein the memory comprises instructions to retrieve a computed input from the computer cache before adjusting the input.

9. The system according to any one of claims 1-8, wherein the memory comprises instructions to clear the cached input when the input is adjusted.

10. The system according to any one of claims 1-9, wherein the memory comprises instructions to clear the cached input and applying a new input into the spectral unmixing matrix.

11. The system according to any one of claims 1-10, wherein the memory comprises instructions to exclude one or more controls when recalculating the spectral unmixing matrix.

12. The system according to any one of claims 1-11, wherein the memory comprises instructions to display a plurality of different matrix quality parameters on the graphical user interface.

13. The system according to any one of claims 1-12, wherein the memory comprises instructions to display the updated matrix quality parameter of the spectral unmixing matrix in real time in response to the adjusted input.

14. The system according to any one of claims 1-14, wherein the system comprises a flow cytometer.

15. A computer implemented method comprising:
receiving a calculated spectral unmixing matrix in a computer cache;
assessing a matrix quality parameter of the calculated spectral unmixing matrix;
adjusting a cached input into the spectral unmixing matrix based on the assessed matrix quality parameter;
recalculating the spectral unmixing matrix with the adjusted input; and
displaying on a graphical user interface on a display an updated matrix quality parameter of the spectral unmixing matrix in response to the adjusted input.
